# EUROPEAN PATENT SPECIFICATION

(11) **EP 4 111 393 B1**
(45) Date of publication and mention of the grant of the patent: **03.04.2024**
(21) Application number: 21707813.8
(22) Date of filing: 22.02.2021
(51) Int. Cl.: G06Q 10/0631, A47J 27/14, A47J 36/32, B65B 3/06, A23L 5/10, G06Q 50/12, A47J 44/00, B65B 25/00, B65B 25/22

(54) **AUTOMATED MEAL PREPARATION APPARATUS**
AUTOMATISIERTE MAHLVORBEREITUNGSVORRICHTUNG
APPAREIL DE PRÉPARATION DE REPAS AUTOMATISÉ

(30) Priority: 24.02.2020 NL 2024983
(43) Date of publication of application: 04.01.2023
(73) Proprietor: EATCH B.V., 2013 XJ Haarlem (NL)
(72) Inventor: SIJM, Jelle Anton Bernd, 2013 XJ Haarlem (NL); TOURNOIS, Bert Huibert, 2013 XJ Haarlem (NL); DE HEIJ, Wouter Bernardus Cornelis, 2013 XJ Haarlem (NL); BUNT, Teunis, 2013 XJ Haarlem (NL); HOLSINK, Johannes Antonius Maria, 2013 XJ Haarlem (NL); GÖRGÜLÜ, Rasit, 2013 XJ Haarlem (NL)
(74) Representative: Arnold & Siedsma
(86) International application number: PCT/NL2021/050121
(87) International publication number: WO 2021/172983

(56) References cited:
- WO-A1-2019/246465
- US-A- 4 919 950
- US-A1- 2017 172 350
- US-A1- 2017 360 259

## Description

The present invention relates to an automated meal preparation apparatus.

Nowadays the food industry, in particular meal producers (e.g. fast casual restaurants and prepacked meal producers) are heavily investing in serving and delivering fresher and healthier meals on-demand at an affordable price point. It has become increasingly important to be able to provide freshly prepared, healthy meals, which are cooked and sold on the same day, and thereby do not require harmful additives to increase shelf life, contain more nutrients, and have a better taste.

On one side of the spectrum are fast casual restaurants, that produce meals that are cooked and sold on the same day, and are cooked individually in small cooking pots. As the meals are cooked individually, these restaurants can cook different types of meals subsequently. Accordingly, they can offer different meal types on the same day. As the meals are cooked and sold on the same day they do not need harmful additives to increase shelf life. Also, as the meals are cooked in small cooking pots they are of higher quality and have better taste, at least partially due to the Maillard reaction, which may also be referred to as the browning reaction. This reaction occurs when heating ingredients at low moisture content. The problem with fast casual restaurants is that their preparation process is labor intensive and the volume of the meals they are able to sell per day is low, and heavily influenced by lunch and dinner peak hours. This leads to a high price point for high quality, fresh and healthy meals for the consumer.

On the other side of the spectrum are industrial prepacked meal producers, which produce meals that are sold days or weeks after they are cooked. These meals are cooked in large batches of, for instance, thousands of meals at the same time in high volume industrial cooking equipment. As the meals are cooked in batches, only one type of meal can be cooked at the same time. Accordingly, these producers require several cooking batches (e.g. several days) to cook a complete offering of different meal types and bring it to the point of sale. As the meals are sold days after they are cooked, they require harmful additives to increase shelf life. Also, as the meals are cooked in large batches with high volume industrial cooking equipment they are of lower quality and have a bad taste, at least partially due to the lack of the aforementioned Maillard reaction (or browning reaction). Due to the large amount of ingredients in such process, a lot of water, i.e. moisture, is present on the surface of the industrial cooking equipment, which does not allow for the Maillard reaction to occur. In turn, this leads to a bland taste of the meals, and is generally offset by the producers by adding large amounts of salt, suger, and the like, which is considered unhealthy.

Specifically, this browning reaction requires a relatively low moisture content. In particular, this reaction is generally most prevalent at temperatures between 140 and 165 °C, and water, i.e. moisture, has a boiling temperature of 100 °C which prohibits the ingredients from reaching the temperatures required for said reaction. Further, in contrast to e.g. fast casual restaurants, as the prepacked meals are cooked in large batches, they require relatively less labor and the volume of the meals that may be sold is high, and not influenced by lunch and dinner peak hours. This leads to a relatively affordable price point, but also relatively bad quality, i.e. not freshly cooked, requiring harmful additives, and generally being unhealthy.

As fresh preparation of meals is a labor intensive process, continuous effort has been made in the fast casual industry, to automate several processes ranging from meal preparation to serving and/or delivering the meals to customers. A niche within this automatization is preparing a freshly cooked meal mostly by automated means, resulting in complex meal preparation devices. However, the automated means in the market today have a low throughput and merely automate a part of the meal preparation process, e.g. only cooking or automated dispensing. Accordingly, specialized personnel is still required to perform the remaining parts of the preparation process.

These complex meal preparation devices automate a part of the meal preparation process, e.g. by means of robotic arms, such that required labor of specialized personnel, e.g. cooks, is somewhat decreased. A disadvantage of these devices is the high investment cost for the meal provider, e.g. fast casual restaurant, especially in combination with the low volume of meals that are produced per day (largely influenced by lunch and dinner hours). Accordingly the return-on-investment time is lengthy, such that these fast casual restaurants in turn charge higher prices for their meals, which is a disadvantage to the customers as well. Therefore, these devices can essentially be regarded as 'gimmicks' of sorts, instead of being a viable alternative to meal preparation personnel, such as cooks.

In contrast, large industrial meal preparation devices exist, which produce identical (prepacked) meals in large batches as mentioned above. These devices are however incapable of preparing freshly cooked meals. In addition, such meals require additives, such as preservatives, to conserve the meal for later consumption. Due to large delays between production and consumption by the customer, the prepacked meals require the aforementioned additives to keep the prepacked meal from spoiling. These highly processed meals are increasingly unwanted by the customer, as these are widely regarded as being less healthy than freshly cooked meals. Further, for each different type of prepacked meal these companies are required to change the settings, cooking times, ingredients, dispensing amounts, et cetera, of the automated means used to prepare the meals in large quantities.

Patent document US 4 919 950 A states in its abstract: a computer controlled, fully automatic wok cooking system that prepares stir-fried, Chinese dishes according to arbitrarily selected customer orders entered at a point-of-sale computer. The computer integrates the operation of the conveyer, cooking, dispensing, and point of sale entry devices according the order, menu and ingredients. A conveyor belt including a plurality of woks draws the woks through a plurality of cooking stations. Each station is provided with a burner or heating element and a dispensing station controlled by the computer according to the customer entered order. Oil or condiments are added at a first station by a corresponding plurality of dispensers and at subsequent cooking stations the food ingredients are either stirred or additional spices, food ingredients and condiments added by corresponding dispensers. At the last cooking station, additional food ingredients, such a vegetables, nuts or other ingredients requiring shorter cooking times, are added and cooking is completed. The completed short order stir-fried dish is then delivered to a serving container at a delivery station. The emptied wok is advanced by the conveyor system through a plurality of cleaning stations, where the wok is inverted, washed, scoured, rinsed and dried. The cleaned and dried wok is then returned by the conveyor system to the initial cooking station to begin the cooking process again according to the then appropriate customer order.

Patent document US 2017/172350 A1 states in its abstract: an automated kitchen system having multiple cooking and/or mixing pots and having containers and dispensers for multiple ingredients. A customer or other person or system selects or creates a meal or other food product and the ingredients for the meal or other product are transferred from dispensers to the cooking and/or mixing pots which simultaneously cook and/or mix the ingredients. After cooking, the meal or other product is served and the cooking pot is cleaned and sanitized and oriented to receive the ingredients for the next meal or other product.

Patent document WO 2019/246465 A1 states in its abstract: an automated food preparation system includes a conveyance system configured to move a foodstuff into a sauce position. The automated food preparation system includes multiple sauce reservoirs each having a pump and each configured to contain a respective one of multiple sauces. The automated food preparation system includes multiple tubes, each in fluid communication with the pump of a respective one of the sauce reservoirs. The automated food preparation system includes a scanning head including multiple openings each coupled with a respective one of the tubes. The automated food preparation system includes a motor drivingly coupled to the scanning head and operable to move the scanning head relative to the foodstuff in the sauce position to position a selected one or more of the openings over a selected one or more regions of the foodstuff.

It is a first objective of the invention, amongst other objectives, to mitigate at least part of the aforementioned disadvantages of the prior art. In particular, the first objective is to provide a meal preparation apparatus for preparation of freshly prepared meals which is economically viable, i.e. freshly prepared like fast casual restaurants, and in high volumes like industrial prepacked meal producers.

According to this first objective, an automated meal preparation apparatus for preparation of meals is provided as defined by claim 1.

The configuration of the above meal preparation apparatus provides a highly efficient cooking process due to its concurrent nature. For instance, at least one cooking pot may collect ingredients from the ingredient dispensers at the ingredient dispensing station(s), whilst at least another cooking pot dispenses an already prepared meal, and yet another cooking pot is used to heat ingredients at the preparation station, et cetera. Hence, by the utilization of multiple cooking pots, the sequential stations of the apparatus may concurrently perform different tasks for different cooking pots. Accordingly, the present apparatus does not require for each cooking pot to have its own set of elements required for preparing a meal (i.e. does not require all functions of the stations at one cooking pot location), thus lowering the overall cost of the apparatus and maintenance requirements, especially when a large number of individual cooking pots are employed in the apparatus. Preferably, the cooking pots are supported along the closed-loop conveyor rail with equal spacing, and more preferably the equal spacing corresponds to an equal spacing of the plurality of stations along the closed-loop conveyor, such that moving the cooking pots to a subsequent station means that all cooking pots are simultaneously conveyed to a subsequent station. Accordingly, a meal preparation apparatus with high throughput is provided. In turn, by using different cooking pots for different meals, a unique individually cooked meal may be prepared in each of the cooking pots. For instance, one of the plurality of cooking pots receives an unique variety/amount of ingredients at the ingredient dispensing station, which ingredients are subsequently heated (preferably according to specific heating instructions) at the preparation station, after which the unique individually cooked meal may be dispensed at the serving station. Hereafter, the specific cooking pot is cleaned at the cleaning station, such that it may again be conveyed to the ingredient dispensing station(s) to receive ingredients in order to prepare a subsequent individual meal. The above configuration according to the present invention is thus capable of preparing unique individually cooked meals, whilst maintaining high throughput due to the plurality of cooking pots, and the continuous (concurrent) nature of meal preparation. In contrast to batch cooking, the apparatus of the present invention is able to cook different types of meals subsequently, and can therefore offer different meal types on the same day and in turn provide fresher meals without harmful additives to increase shelf life.

Furthermore, the configuration of the apparatus provides superior food safety standards, at least due to the separated stations. By having separate, sequential stations along the closed-loop conveyor rail, food safety can be guaranteed. In particular, heat and moisture and the like, which may originate from e.g. the preparation station(s) and the cleaning station(s), do not affect the ingredient dispensing station. Namely, the ingredient dispensers of the ingredient dispensing stations may comprise raw ingredients, which may be compromised in terms of food safety by such heat and moisture sources. In turn, food safety is also improved by not having ingredient dispensing stations located at other stations. In particular, this prevents raw/uncooked ingredients from touching the cooking pots during the cooking process (i.e. at the preparation station), during serving (i.e. at the serving station), and during cleaning (i.e. at the cleaning station). For example, raw/uncooked ingredients which fall in the cooking pot at the preparation station may remain uncooked, and may comprise bacteria or the like, which would compromise the food safety. This is effectively mitigated by using the concept of separate, sequential stations. It may also be envisaged that the meal preparation apparatus according to the invention comprises certain parallel tasks. For instance, the closed-loop conveyor rail may comprise a portion with two or more parallel rails. For instance, the parallel rails may be configured to accommodate preparation stations therebetween or on the outside thereof. Accordingly, a compact floor plan may be achieved as a larger number of holders may be present at a certain station at a certain time, such that the throughput is further increased.

Accordingly to the above, the meal preparation apparatus of the present invention allows for preparation of unique freshly and individually prepared (customized) meals, which is economically viable due to the high throughput, all whilst maintaining food safety standards. Moreover, the maintenance costs (e.g. cleaning effort) of the apparatus are low, due to the separation of the ingredient dispensers and the other stations, and due to the ingredients being directly dispensed and prepared in the cooking pot. In other words, ingredients generally only contact the ingredient dispensers and the cooking pots, and are thus generally isolated from further components of the apparatus.

Preferably, the automated meal preparation apparatus comprises:
- a database configured to store meal recipes, wherein each meal recipe indicates ingredients, and a heating instruction comprising a heating time, a heating temperature, and/or a heating power, and
- a controller communicatively coupled to the database, and the ingredient dispenser and/or the heating element, wherein the controller is configured to control the ingredient dispenser based on at least the ingredients indicated by each meal recipe, such that the ingredient dispenser dispenses the ingredients and the cooking pot conveyed to the ingredient dispensing station receives the ingredients in order to form the meal in said cooking pot, and/or configured to control the heating element based on at least the heating instruction, such that the ingredients in the cooking pot conveyed to the preparation station are heated according to the heating instruction.

As the ingredient dispensers of the ingredient dispensing station(s) are separately controlled by the controller, each cooking pot may receive a unique amount/variation of ingredients, without slowing down the cooking process, as all stations perform their tasks concurrently and in sequential manner. For instance, one of the plurality of cooking pots receives a unique variety/amount of ingredients, preferably controlled by the controller, at the ingredient dispensing station, which ingredients are subsequently heated, preferably according to specific heating instructions, at the preparation station, after which the unique individually cooked meal may be dispensed at the serving station. Hereafter, the specific cooking pot is cleaned at the cleaning station, such that it may again be conveyed to the ingredient dispensing station(s) to receive ingredients in order to prepare a subsequent meal. The above configuration is thus capable of preparing unique individually cooked meals, whilst maintaining high throughput due to the plurality of cooking pots, and the continuous (concurrent) nature of meal preparation. As mentioned above, in contrast to batch cooking, the present apparatus is able cook different types of meals subsequently, and can therefore offer different meal types on the same day, and in turn provide fresher meals without harmful additives to increase shelf life.

The meal preparation apparatus preferably comprises multiple ingredient dispensing stations, each comprising at least one ingredient dispenser. The ingredient dispensing station(s) and/or the ingredient dispenser(s) may be actively and/or passively cooled. The ingredient dispensing station, being a separate station, is located upstream and separated from the preparation station(s) in the conveying direction. This benefits food safety, as the ingredients could be heated and/or moistened by the preparation stations if they were located too closely to the ingredient dispensing station(s). Heat and moisture accelerate growth of bacteria, mold, and microorganisms, which is to be mitigated for reasons of food safety. The ingredient dispensing station is preferably located downstream from the cleaning station(s) in the conveying direction, such that the cooking pots arrive at the ingredient dispensing station in a clean state. Accordingly, the ingredients are dispensed in clean cooking pots, in order to benefit food safety. Further preferably, the ingredient dispensing station is located downstream from the cooling station(s) (described below) in the conveying direction, such that the cooking pots arrive at the ingredient dispensing station in a cooled state. Accordingly, the ingredients do not get heated immediately upon entering the cooking pot, and the cooking pot does not (indirectly) heat the ingredient dispenser(s). Further preferably, the ingredient dispensing station is located downstream of the drying station(s) (described below) in the conveying direction, such that the cooking pots arrive at the ingredient dispensing station in a dry state. Accordingly, the ingredients are not affected by left-over moisture, e.g. (cleaning) water and/or cleaning solutions, upon entering the cooking pot.

The meal preparation apparatus preferably comprises multiple preparation stations, each comprising at least one heating element. Different types of meals/ingredients require different heating times, heating temperatures, and/or heating power to be cooked correctly. The heating elements of the preparation stations can be controlled by the controller accordingly. The heating time may also be zero in some cases, i.e. the heating element of one or more of the multiple preparation stations can be turned off, if needed. Having multiple preparation stations also increases through-put of the apparatus. In particular, multiple cooking pots can be located at multiple preparation stations at the same time, respectively. In other words, a larger number of cooking pots can be used concurrently in the apparatus, when comprising a larger number of preparation stations. In addition, the total heating time for a certain meal does not hold up the apparatus as a whole, as the heating time can be divided between multiple preparation stations. For instance, if a meal requires 5 minutes of cooking time and the apparatus comprises five preparation stations, the cooking pot can be heated for 1 minute at each of the five preparation stations (or a different (non-constant) distribution of heating times per preparation station, if required). As mentioned above, the preparation stations are located downstream from the ingredient dispensing station(s) in the conveying direction, as it is required that ingredients are present in each cooking pot before arriving at the preparation station to heat said ingredients. In addition, it is unwanted to have raw ingredients (i.e. in the ingredient dispensers) near the preparation station. In particular, certain ingredients, such as meats, must be thoroughly heated before consumption. Therefore, it is unwanted to heat the ingredients in the vicinity of the ingredient dispensers, as uncooked ingredients may leak/spill down towards the cooking pot, such that, for example, uncooked meat becomes mixed with cooked meat. In addition, fumes from the heating process, such as smoke, vapor or grease, may reach the ingredient dispensers, such that the uncooked ingredients are spoiled. Having separate preparation stations mitigates these risks effectively. The preparation stations are located upstream from the serving station(s) in the conveying direction, as the ingredients (i.e. the meal) is to be heated (i.e. prepared) before serving, in most cases. The preparation station(s) may (each) further comprise an extractor hood configured to process fumes generated during heating of the at least part of the ingredients in the cooking pot. As the cooking pot both collects the ingredients and prepares the meal, e.g. by heating, hygiene is not compromised as no additional separate ingredient collection system (e.g. collection tray) is required.

The meal preparation apparatus may comprise one or more serving stations, depending on the configuration of the apparatus. In most cases, the apparatus will comprise one serving station. In specialty cases, the apparatus may comprise more than one serving station. For instance, when two cooking pots are to be used to form a single meal, the apparatus may comprise two serving stations which each serve one of the two components of the single meal from the two cooking pots. The serving station(s) are located downstream from the preparation station(s) in the conveying direction, as the meal needs to be prepared at the preparation station(s) before serving. The serving station(s) are located upstream from the cleaning station(s) in the conveying direction, such that the cooking pots get cleaned after serving the meal (i.e. the heated ingredients).

The meal preparation apparatus may comprises one or more cleaning stations, each comprising at least one cleaning unit. If multiple cleaning stations are used in the apparatus, each of the multiple cleaning stations may serve a different and/or the same task. For instance, a first cleaning station may spray a cleaning solution in the cooking pots, while a second, and subsequent, cleaning station may spray only water in the cooking pot so as to remove the cleaning solution sprayed therein by the first cleaning station. The cleaning station(s) are located downstream from the serving station(s) in the conveying direction, such that the cooking pots may be cleaned after serving the meal, i.e. the heated ingredients, at the serving station. As mentioned above, the cleaning station(s) are located upstream from the ingredient dispensing station(s), such that the cooking pots may arrive at the ingredient dispensing station(s) in a cleaned state. In accordance with the above, separating the cleaning process from the dispensing, cooking and serving processes allows for improved hygiene. Namely, it is unfavorable for e.g. cleaning waste water to come in contact with the ingredient dispensers or a cooking pot in the cooking process (i.e. at the preparation station). This risk is effectively mitigated by the separate cleaning station(s).

The meal preparation apparatus enables the preparation of unique individually cooked meal orders (e.g. customized meals). As each order, i.e. meal recipe, may comprise a list of ingredients, which may for instance be retrieved from a storage device, e.g. the database, by the controller, the controller is able to control the ingredient dispenser accordingly. For example, a customer having a certain allergy or diet may remove a certain ingredient from an exemplary meal recipe, whilst another customer may add certain ingredients for flavor or dietary requirements. In another example, the customer can fully customize a blank meal recipe, by choosing for instance a carbohydrate-base ingredient such as rice, potatoes, pasta, a cereal grain or the like, and adding further ingredients of their choice to the carbohydrate-base ingredient, such as spices, sauces, vegetables, dairy products, plant-based products, meat products, fish products, seafood products or the like. In a restaurant environment, significant labor is required to be able to serve all customers with highly customized meals, whilst the present invention enables every prepared meal to be customized without additional labor or required preparation time. In particular, the apparatus embodies a continuous meal preparation process, where various tasks are performed on various cooking pots concurrently. Preferably, each cooking pot remains at each subsequent station for a predetermined period of time, such that each task to be performed on each cooking pot at each station may be performed during said predetermined period of time. After said predetermined period of time has elapsed, the respective cooking pots are each conveyed along the closed loop conveyor rail to a subsequent station by the driving means, where, in turn, a further task is performed by the subsequent station.

Preferably, the meal recipe further indicates amounts of the ingredients, and wherein the controller is further configured to control the ingredient dispenser based on the amounts of the ingredients indicated by the meal recipe, such that the ingredient dispenser dispenses the amounts of the ingredients indicated by the meal recipe.

The controller may be coupled to a variety of ingredient dispensers, which each may contain a different ingredient and/or method of dispensing. The identities of each dispenser may be communicated to the controller by the ingredient dispenser, or may be stored in a storage device, e.g. the database, which is in communication with the controller. Accordingly, the controller may compose a meal prescribed by the meal recipe by controlling the appropriate ingredient dispensers. The amounts, i.e. quantity, of the ingredient may also be customizable for each meal. For example, a customer may require additional or less of a certain ingredient is his/her meal than the standard amount. The controller may then control the ingredient dispenser in such manner that less or more of a certain ingredient is dispensed. The controller may in some cases also control the order, i.e. sequence, of dispensing the different ingredients.

After the cooking pot has received ingredients in order to form a meal, at least part of the ingredients may need to be heated before consumption. For instance, certain ingredients, such as meats, may need to be heated to an internal temperature of 70 degrees Celsius or above. The heating element, which heats the cooking pot, may be an induction heating element, burner, or the like. The heating element may provide the heat to the cooking pot, such that the cooking pot in turn heats the ingredients and/or may provide the heat to the ingredients directly such that the heating element heats the ingredients directly. Depending on the types of ingredients the heating time, heating power and/or heating temperature may be controlled such that ingredients are not overcooked (e.g. burnt or mushy) or undercooked (e.g. raw or rare). The heating time, heating power and/or heating temperature may also be controlled based on the type of material. For example, a wok dish may require high heat for a relatively short time, whilst a soup may require lower heat for a longer time. The meal preparation apparatus may also comprise a number of different heating elements in order to prepare a variety of different types of meals, such as a burner and an induction element, or any other combination of heating elements.

The controller and/or the database may be configured to determine, e.g. calculate, or alter the heating instruction, comprising the heating time, the heating temperature, and/or the heating power, for a certain meal recipe. The heating instructions may for instance be determined, at least partially, by the amount and/or types of ingredients. The heating instructions may for instance be determined, at least partially, by a certain preparation style, e.g. boiling, baking, stir-frying, searing, and the like.

The number, weight or amount and type of ingredients may affect the heating instructions (e.g. heating time, heating power, and/or heating temperature) as well. For instance, heating 200 grams of beef may require a longer heating time than heating 100 grams of beef. The amount may in certain cases also be expressed as a weight or dimension of an ingredient. For instance, an ingredient with a large dimension may require a longer heating time or higher heating temperature for its internal temperature to reach the required temperature.

Preferably, the meal preparation apparatus further comprises a temperature sensor, e.g. thermometer, such as an infrared thermometer, in order to measure the temperature of the ingredients in the cooking pot, the temperature of the cooking pot itself, and/or the temperature of the heating element. The temperature sensor is preferably communicatively coupled to the controller, and preferably the controller is further configured to control the heating element, and/or the heating time and/or the heating temperature, based on the measurements of the temperature sensor, so as to provide closed-loop control (i.e. feedback control) of the heating element.

The dispensing mechanism is configured to dispense the meal from the cooking pot in, for instance, a meal container. Accordingly, removing the meal from the cooking pot does not require the interference of an operator of the meal preparation apparatus. The dispensing mechanism may be communicatively coupled to the controller such that the controller may control the time of dispensing.

The cleaning unit may be configured to clean the cooking pot, remove ingredients from the cooking pot, disinfect the cooking pot, and/or degrease the cooking pot. The cleaning unit may comprise a nozzle, which is preferably connected to a water and/or cleaning solution source by means of one or more conduits, wherein the nozzle is configured to spray the water and/or cleaning solution into or onto the cooking pot so as to clean the cooking pot. Preferably, the cleaning unit further comprises a brush, which may be mechanically driven in order to spin the brush, wherein the brush comprises moving means configured to move the brush to a cleaning position, wherein in the cleaning position the brush contacts a surface of the cooking pot. The cleaning unit may further comprise compressor configured to blow compressed air, i.e. air under a pressure higher than the ambient pressure, into or onto the cooking pot in order to further clean and/or dry the cooking pot.

Preferably, the cleaning unit is positioned beneath the cooking pot which has been conveyed to the cleaning station. The cleaning unit preferably comprises a movable splash screen configured to move from a resting position to a protective position, wherein in the protective position the splash screen at least partially surrounds the cooking pot in order to ensure that the cleaning water and/or cleaning solution and/or foodstuffs from the cooking pot do not splash to the environment surrounding the cleaning unit. Further, the cleaning unit preferably comprises a drain configured to drain the cleaning water, cleaning solution, and/or foodstuffs or the like to a drainage location, e.g. the sewer or a septic tank. According to the present example, the cooking pot is substantially inverted from its upright position during cleaning, such that the water and/or cleaning solution sprayed in or on the cooking pot is mostly removed by means of gravity. The drain is preferably positioned such that the water and/or cleaning solution sprayed in or on the cooking pot flows naturally, by means of gravity, towards the drain. Preferably, the cleaning water is heated water, wherein the water is preferably heated to a temperature of 60 degrees Celcius or higher. The cleaning unit may further comprise an inspection sensor, such as a camera, in order to determine whether a cooking pot has been sufficiently cleaned. Preferably the cleaning unit is communicatively coupled to the controller, such that the controller may control the cleaning unit, such as the nozzle, splash screen, brush, et cetera. Preferably the inspection sensor is communicatively coupled to the controller, and the controller is preferably further configured to control the cleaning unit based on information retrieved from the inspection sensor.

The controller may preferably access the database in order to retrieve, preferably in a predetermined sequence, a certain order, i.e. meal recipe, for a present timeslot, so as to prepare said certain order for said present timeslot. In order to identify the meal after preparation or the like, the order may be coupled to a user or the like, which user may for instance be a company, a person, an operator of the meal preparation apparatus, a cashier, et cetera.

The controller and/or the database may also comprise an input interface, which allows the user and/or operator to place an order for a meal, and may be communicatively coupled, wired or wirelessly, with the controller and/or the database such that the user may place an order for a meal in the database by means of the input interface. The input interface may be a website connected to the controller and/or database, a mobile application connected through an internet connection to the controller and/or database, a touchpad interface disposed on or near the meal preparation apparatus, a computer device connected, wired or wirelessly, to the meal preparation apparatus, or the like. Any suitable input interface may be used in the present invention.

The controller of the meal preparation apparatus may be any device suitable for the functions as set forth in the present application. For instance, the controller may be a computer, a Field Programmable Gate Array (FPGA), a microcontroller, a remote server connected (by wire or wireless) to the meal preparation apparatus, or the like.

The database may be any suitable memory device, such as an (online) database coupled wired or wirelessly to the apparatus, a flash memory, a hard disk drive, a solid-state drive, or any suitable volatile or non-volatile memory system, embedded on the controller or separate from the controller.

Preferably, the cooking pots are supported on the closed-loop conveyor rail by means of a carriage. For instance, each cooking pot may be supported by a carriage, which in turn is supported by the closed-loop conveyor rail. Said carriage is then movable along the closed-loop conveyor rail by the driving means. The driving means may comprise a chain, connected to one or more of the plurality of cooking pots and/or an aforementioned carriage. Other suitable driving means may be envisaged. The carriage and/or cooking pots may be supported on the closed-loop conveyor rail with freely rotatable wheels, bearings, and/or sliders.

The automated meal preparation apparatus further comprises a tilting mechanism configured to tilt each of the plurality of cooking pots about a tilt axis substantially parallel to the bottom thereof, wherein a tilt angle of each cooking pot about the tilt axis of 0° corresponds to an upright position of the cooking pot. The tilt angle is to be construed as an absolute value. For instance, a negative tilt angle is to be considered equivalent to a positive tilt angle with the same magnitude (e.g. -90° is to be understood as equivalent to 90°). In other words, a right-hand rotation is to be considered equivalent to a left-hand rotation.

Tilting the cooking pot may, for instance, be useful for dispensing the ingredients from the cooking pot at the serving station, and/or for disposal of leftover ingredients and the like at the cleaning station, et cetera. In particular, the desired tilt angle of the cooking pot may be different for each station.

The tilt axis may be located above, below, or in the cooking pot, so as to affect the desired tilting movement. Preferably, the tilt axis lies below a base of the cooking pot. The rotation of the cooking pot about the tilt axis is effected, fully or partially, by the tilting mechanism, such as an actuator. The tilting mechanism may be communicatively coupled to the controller such that the controller may control the tilt angle of the cooking pot. For instance, during mixing of the ingredients, the cooking pot may be tilted (e.g. to a tilt axis between 0° and 90°) so as to increase the effectiveness of a mixing fin or the like. For instance, during rotation of the cooking pot about a rotation axis (which is elaborated upon below) the cooking pot may be tilted such that the ingredients tumble within the cooking pot, so as to, for instance, improve the mixing characteristics.

The tilting mechanism comprises a guide rail running along the closed-loop conveyor rail and configured to engage, directly or indirectly, each of the plurality of cooking pots, wherein the tilting mechanism at least partially controls the tilt angle of each cooking pot along the closed-loop conveyor rail by varying a distance between the guide rail and the closed-loop conveyor rail. Preferably, the guide rail engages a carriage on which a cooking pot is supported. The cooking pot may be tiltable on the carriage, and/or the carriage may be tiltable to effect the tiling of the cooking pot. The guide rail may be configured to tilt the cooking pots by locally, along the closed-loop conveyor rail, moving away or towards the cooking pot to which it is connected by means of a linkage or the like. For instance, the linkage is connected to a support element of the cooking pot, at a distance from the tilt axis of said cooking pot. Thus, by pulling or pushing the support element at a position on the support element at the distance from the tilt axis, a rotation of the cooking pot may be effected. The tilting mechanism may comprise a rack and pinion, comprising, for instance, a circular gear (i.e. pinion) connected to the cooking pot, preferably substantially concentric with the tilt axis of the cooking pot, and a linear gear (i.e. rack) which engages the teeth of the pinion. The guide rail may engage the rack, in order to translate a linear motion of the guide rail to a rotational motion of the cooking pot, through the pinion.

By using the above guide rail, the tilt angle of each cooking pot is locally controlled along the closed-loop conveyor in a passive manner. This allows for the cooking pots having predetermined tilt angles at various locations along the closed-loop conveyor, without actively controlling the tilt angles. Hence, the complexity of the control of the tilt angles of the cooking pots is effectively decreased. In turn, no active actuators are required to tilt the cooking pots by means of the guide rail, such that the apparatus comprises less moving parts (i.e. less potential points of failure) and such that (electrical or pneumatic, et cetera) power is saved.

Preferably, the tilting mechanism is configured to tilt a cooking pot of the plurality of cooking pots conveyed to the ingredient dispensing station to a tilt angle of between 0° and 90°, and preferably about 0°. This allows the ingredients dispenser(s) of the ingredient dispensing station(s) to be located substantially, and preferably directly, above the cooking pot during dispensing. A tilt angle of about 0° corresponds to an upright position of the cooking pot, e.g. the walls of the cooking pot being substantially vertical, and the base of the cooking pot being substantially horizontal.

Additionally or alternatively, the tilting mechanism is configured to tilt a cooking pot of the plurality of cooking pots conveyed to the preparation station to a tilt angle of between 0° and 90°. As mentioned above, this orientation may increase the effectiveness of a mixing fin or the like. For instance, during rotation of the cooking pot about a rotation axis (which is elaborated upon below) the cooking pot may be tilted such that the ingredients tumble within the cooking pot, so as to, for instance, improve the mixing characteristics.

Additionally or alternatively, the tilting mechanism at least partially constitutes the dispensing mechanism, and is configured to tilt a cooking pot of the plurality of cooking pots conveyed to the serving station to a tilt angle of between 90° and 180° in order to dispense the meal. Accordingly, the meal may be dispensed from the cooking pot by means of gravity, such that no further dispensing means are required to remove the meal from the cooking pot.

Additionally or alternatively, the tilting mechanism is configured to tilt a cooking pot of the plurality of cooking pots conveyed to the cleaning station to a tilt angle of between 90° and 270°, and more in particular about 180°, and the cleaning unit is positioned at a height lower than the cooking pot. In other words, during cleaning the cooking pot is preferably upside-down, such that removal of residue and cleaning liquids in the cooking pot is aided by gravity. Further, this mitigates liquid from collecting in the cooking pot, which may spill or overflow from the cooking pot at an undesired location.

In a further example of the automated meal preparation apparatus, each of the plurality of cooking pots comprises at least one of, and preferably all of:
- a mixing fin configured to mix the ingredients in the cooking pot,
- a non-sticking and/or heat conducting material, preferably in the form of a coating, and
- a rotation mechanism configured to allow rotation of the cooking pot about a rotation axis thereof, wherein the rotation mechanism is mechanically drivable in order to rotate the cooking pot about the rotation axis.

A cooking pot may comprise an interior surface defining an interior volume of the cooking pot, and configured to receive the ingredients dispensed from the ingredient dispenser in the interior volume. Preferably, the interior surface comprises the non-sticking and/or heat conducting material, preferably in the form of a coating. The cooking pot may comprise a base and at least one wall, which define the interior volume of the cooking pot. Preferably, the wall is a cylindrical wall being open at one end and closed at the other end, preferably by the base. In other words, the at least one wall extends from the base upwards in order to form the cooking pot, which may be shaped like a wok or saucepan or the like. For example, the non-sticking material may be polytetrafluoroethylene ("Teflon"), or the like. The cooking pot may further comprise an inductive element configured to heat the cooking pot.

Preferably, the mixing fin extends along and protrudes from at least part of a base and/or wall of the cooking pot. The mixing fin may be a mechanically driven element moved in the interior or towards the cooking pot by means of an actuator or may be place in the cooking pot. The mixing fin may alternatively be a passive mixing fin disposed in the cooking pot, which mixes the ingredients in the cooking pot due to movement of the ingredients in the cooking pot.

The cooking pot may be configured to rotate about a rotation axis in order to scatter the ingredients within the cooking pot by means of the rotation thereof about its rotation axis. To this effect, the cooking pot may comprise a rotation mechanism. The cooking pot may, for instance, comprise a rod attached to the cooking pot, which rod may preferably be driven by a rotational motor, such as an electromotor, so as to rotate the cooking pot about the rotation axis. The rotational motor may for instance be provided with power through a brush contact, or the like, connected thereto, such that the rotational motor is provided with electrical power at specific locations along the closed-loop conveyor. For instance, the brush contact may contact an electrical power source after the cooking pot being conveyed to the preparation station, such that the cooking pot is rotated at the preparation station. Further, for example, the cooking pot may rotate during dispensing of the ingredients by the ingredient dispenser so as to distribute and/or scatter the ingredients in the cooking pot. The cooking pot may, additionally or alternatively, rotate during mixing of the ingredients, in order to improve mixing characteristics. The cooking pot may, additionally or alternatively, rotate during heating of the ingredients by means of the heating element in order to evenly heat the ingredients forming the meal. The cooking pot may, additionally or alternatively, rotate during cleaning, in order to improve cleaning characteristics.

It is further preferred that the ingredients are mixed by means of the mixing fin and the rotation of the cooking pot about the rotation axis. Preferably, the mixing fin is a passive mixing fin, for instance disposed on in the interior of the cooking pot, such as on the base and/or wall thereof. Accordingly, in the present example the ingredients are effectively mixed in the cooking pot by means of the rotation about the rotation axis and the mixing fin.

In a further example of the automated meal preparation apparatus, the closed-loop conveyor rail extends at least partially through a cooling chamber, and wherein the ingredient dispensing station is located in the cooling chamber. The cooling chamber may comprise a entry passage, through which, as seen in the conveying direction, the closed-loop conveyor rail enters the cooling chamber. The cooling chamber may comprise an exit passage, through which, as seen in the conveying direction, the closed-loop conveyor rail exits the cooling chamber. Preferably, the entry passage is located upstream from the ingredient dispensing station(s) in the conveying direction. Preferably, the exit passage is located downstream from the ingredient dispensing station(s) in the conveying direction. The cooking pots conveyed along the closed-loop conveyor rail in the conveying direction are conveyed through the entry passage, thereby entering the cooling chamber, to the ingredient dispensing station(s). After collecting ingredients at the ingredient dispensing station(s), the cooking pots conveyed along the closed-loop conveyor rail in the conveying direction are conveyed through the exit passage, thereby exiting the cooling chamber. The ingredient dispensing station(s) and the associated ingredient dispenser(s) are preferably fully contained within the cooling chamber.

The cooling chamber is configured to cool the environment within the chamber, so as to keep raw ingredients in the ingredient dispenser(s) cool. Accordingly, the cooling chamber improves food safety. Preferably, the cooling chamber is configured to maintain an internal chamber temperature of between 0 and 10 °C. It is preferred that the cooking pots entering the cooling chamber through the entry passage are pre-cooled by a cooling station (described below), such that condensation forming by cooking pots in the cool environment of the cooling chamber is mitigated.

In a further example of the automated meal preparation apparatus, the plurality of stations further comprises a sauce dispensing station comprising a sauce dispensing nozzle, wherein the sauce dispensing station is configured to bring the nozzle in a dispensing state, wherein the nozzle is positioned to dispense sauce in a cooking pot of the plurality of cooking pots conveyed to the sauce dispensing station, and a resting state, wherein the sauce dispensing nozzle is shielded and/or distanced from said cooking pot. In an example, the sauce dispensing station comprises an extendible arm, wherein the sauce dispensing nozzle is positioned on the extendible arm. Preferably, in an extended position of the arm, the nozzle is positioned to dispense sauce in a cooking pot of the plurality of cooking pots conveyed to the sauce dispensing station, and, in a retracted position of the arm, the nozzle is distanced from said cooking pot. Alternatively or additionally, the sauce dispensing station is configured to be movable between a dispensing position, wherein the nozzle is positioned to dispense sauce in a cooking pot of the plurality of cooking pots conveyed to the sauce dispensing station, and a resting position, wherein the nozzle is distanced from said cooking pot. Preferably, the sauce dispensing station comprises a heating element (according to any of the heating elements described herein), in order to heat the ingredients in the cooking pot while the sauce is being dispensed in the cooking pot. Additionally or alternatively, the sauce dispensing station may comprise a hatch. Preferably, the hatch is movable between an open position, wherein the nozzle is positioned to dispense sauce through the hatch in a cooking pot of the plurality of cooking pots conveyed to the sauce dispensing station, and a closed position, wherein the sauce dispensing nozzle is shielded from the cooking pot by the hatch. By distancing and/or shielding the nozzle and/or a sauce reservoir of the sauce dispensing station, these components are not unnecessarily heated by the cooking pot. In other words, this ensures that the dispenser nozzle is exposed to the heat of the cooking pot for the least amount of time possible, which minimizes the changes that the sauce and/or nozzle are contaminated or heated by the hot cooking pot in order to ensure food safety. Preferably, the sauce dispensing station comprises a cooling element, configured to cool the sauce(s) in the sauce dispensing station by means of active and/or passive cooling.

Preferably, the sauce dispensing station is located downstream from at least one preparation station in the conveying direction. Accordingly, the ingredients in the cooking pot are heated before the sauce is added to the cooking pot at the sauce dispensing station. This is beneficial for the quality of the meal, due to the Maillard reaction and/or caramelization. The Maillard reaction, which may also be referred to as the browning reaction, and/or caramelization are applied to the ingredients by means of heating, and benefit the flavor of the ingredients. These reactions require a relatively low moisture content, which may not effectively be achieved when a sauce is added to the ingredients prior to heating and/or prior to these reactions taking place. These reactions may be effected by e.g. searing, baking, grilling, frying, et cetera. The Maillard reaction is generally most prevalent at temperatures between 140 and 165 °C. Water, i.e. moisture, has a boiling temperature of 100 °C which prohibits the ingredients from reaching the temperatures required for the Maillard reaction. Preferably, the sauce dispensing station is located downstream from at least one preparation station in the conveying direction and upstream from at least one further preparation station in the conveying direction. Accordingly, the Maillard and/or caramelization reactions are applied to the ingredients at the preparation station(s) upstream from the sauce dispensing station, after which the sauce is added at the sauce dispensing station, which is followed by heating and/or reduction, i.e. thickening, of the sauce at preparation station(s) downstream from the sauce dispensing station.

In a further example of the automated meal preparation apparatus, the plurality of stations further comprises a spice dispensing station, configured to dispense dried spices and/or herbs, the spice dispensing unit comprising a tube configured to receive the dried spices and/or herbs, and an air compressor connected to the tube, wherein the air compressor is configured to release compressed air into the tube so as to eject the dried spices and/or herbs from an open end of the tube into a cooking pot of the plurality of cooking pots conveyed to the spice dispensing station, wherein the open end of the tube is sufficiently distanced from the cooking pot such that vapor from the cooking pot entering the tube is minimized, and preferably prevented. Preferably, the tube is a rigid pipe, e.g. barrel. Preferably, the tube comprises an air inlet at one end thereof, opposite the open end. Preferably, the tube further comprises a loading hole in a sidewall thereof, such that the spices and/or herbs may be placed in the tube through said loading hole. Preferably, the loading hole comprises a valve, configured to move between an open position, wherein the spices and/or herbs may enter the tube, and a closed position, wherein the loading hole is closed. In a resting state of the spice dispensing station, i.e. when no spices and/or herbs are present or being loaded in the tube, the air compressor preferably releases a continuous (low-pressure) airflow into the tube, such that vapors and other airborne contaminants are prevented from entering the tube. When spices and/or herbs are loaded in the tube, and the associated cooking pot is conveyed to the spice dispensing station, and preferably the valve is in the closed position, the air compressor releases a burst of air, which ejects the spices and/herbs out from the open end of the tube, which is aimed at the cooking pot. Consequentially, the spices and/herbs travel the distance between the open end of the tube and the interior of the cooking pot through the air. According to the above, dried spices and/or herbs can be added to a cooking process without being affected by moisture and/or heat emitted from the cooking pots. In particular, it is preferred for most spices and/herbs to be added during the preparation process, such that moisture and/or heat becomes an issue.

The spice dispensing station may comprise a plurality of the aforementioned tubes and/or air compressors. The meal preparation apparatus may also comprise multiple spice dispensing stations. The spice dispensing station(s) may comprise a variety of spice dispensers and/or herb dispensers, which all feed to one or more of the aforementioned tubes. Further, the spice dispensing station may comprise a heating element, such that the ingredients in the cooking pot may be heated whilst spices and/or herbs are added thereto. Preferably, the spice dispensing station is located downstream from at least one preparation station in the conveying direction. Accordingly, the ingredients in the cooking pot are heated before the spices and/or herbs are added to the cooking pot at the spice dispensing station. Preferably, the spice dispensing station is located downstream from at least one preparation station in the conveying direction and upstream from at least one further preparation station in the conveying direction.

In a further example of the automated meal preparation apparatus, the plurality of stations further comprises an oil dispensing station, located upstream from the preparation station in the conveying direction, configured to dispense cooking oil in a cooking pot of the plurality of cooking pots conveyed to the oil dispensing station, preferably by spraying. Preferably, the oil dispensing station is also located upstream from the ingredient dispensing station in the conveying direction, such that oil may be dispensed in the cooking pot at the oil dispensing station before the ingredients are dispensed in said cooking pot at the ingredient dispensing station. The apparatus may further comprise a plurality of oil dispensing stations. For instance, a first oil dispensing station may be located upstream from the ingredient dispensing station(s) in the conveying direction, and a second oil dispensing station may be located downstream from the ingredient dispensing station(s) in the conveying direction. The oil dispensing station may comprise an oil reservoir, containing the oil to be dispensed. Said oil is preferably cooking oil, such as frying oil. Said oil is preferably sprayed in the cooking pot by a spraying nozzle of the oil dispensing station. Alternatively or additionally, an oil dispensing station may be configured to dispense butter, such as liquid butter. By dispensing oil in the cooking pots, the ingredients are prevented from sticking to the cooking pot (e.g. caking) upon heating and the flavor of the heated ingredients may be improved.

In a further example of the automated meal preparation apparatus, the plurality of stations further comprises a cooling station, located downstream from the cleaning station in the conveying direction, and comprising cooling means configured to cool a cooking pot of the plurality of cooking pots conveyed to the cooling station. The cooling means may comprise a spraying system configured to spray cool liquids and/or gasses in or on the cooking pot. The cooling means may comprise a cooling element configured to be brought into direct contact with the cooking pot, in order to conduct heat from the cooking pot to the cooling element. Preferably, the cooling station is located upstream from a drying station (described below) in the conveying direction, and preferably upstream from the ingredient dispensing station. The cooling station ensures that the cooking pot is conveyed to the ingredient dispensing station(s) in a cool state, to improve food safety. Further, the cooling station is preferably located upstream from the entry passage of the cooling station, in the conveying direction, such that thermal stresses in the cooking pot, as it moves from the cleaning station to the ingredient dispensing station(s) in the cooling chamber, are limited.

In a further example of the automated meal preparation apparatus, the plurality of stations further comprises a drying station, located downstream from the cleaning station in the conveying direction, and comprising drying means configured to dry a cooking pot of the plurality of cooking pots conveyed to the drying station. The drying means may comprise a drying system configured to blow heated air in and/or on the cooking pot, in order to dry said cooking pot. The drying means may comprise absorbing materials which may be inserted and/or brought into contact with the cooking pot. The absorbing materials are removed at the drying station before the cooking pot is conveyed in the conveying direction, towards subsequent stations. The drying station is preferably located upstream from the ingredient dispensing station(s) in the conveying direction, such that the cooking pots arrive at the ingredient dispensing station(s) in a dry state, which benefits food safety.

In a further example of the automated meal preparation apparatus, the serving station further comprises an automated meal container dispenser configured to provide a meal container before dispensing the heated ingredients by means of the dispensing mechanism, such that the heated ingredients are dispensed from the cooking pot in the provided meal container. The meal container may for instance be a tray able to withstand a reheating process in an oven and/or a microwave, a plastic or cardboard bowl or plate, and the like. The automated meal container dispenser may be communicatively coupled to the controller, such that the controller may cause the automated meal container dispenser to dispense a container suitable for the meal to be dispensed. The automated meal container dispenser may be configured to dispense at least two different types of meal containers. The controller may be communicatively coupled to the automated meal container dispenser, wherein the controller is further configured to control the automated meal container dispenser to dispense one of the at least two different types of meal containers based on an indicator associated with the meal recipe associated with the meal to be dispensed. At least one of the at least two different types of meal containers may be a tray able to withstand a reheating process in an oven and/or a microwave.

Preferably, the automated meal preparation apparatus further comprises an additional food dispenser, configured to dispense additional food articles in the provided meal container before or after dispensing the heated ingredients by means of the dispensing mechanism. The additional food articles may for instance include carbohydrate-base ingredient such as rice, potatoes, pasta, a cereal grain or the like, and/or raw or cooked vegetables, such as sliced lettuce. Preferably, the additional food article is a staple food, serving as a basis for the meal, after which the heated ingredients from the cooking pot are dispensed on top of, or besides, or under, the staple food. Accordingly, a balanced two-component meal may be formed. The additional food dispenser may comprise a heating element, in order to keep the additional food articles hot, and/or a cooling element, in order to keep the additional food articles cool.

In a further example of the automated meal preparation apparatus, the ingredient dispensing station further comprises a scale configured to measure the weight of a cooking pot of the plurality of cooking pots conveyed to the ingredient dispensing station, wherein the scale is communicatively coupled to the controller, preferably wherein the scale and/or the cooking pot comprises a moving mechanism configured to move the scale and the cooking pot towards each other until the cooking pot rests on the scale, so as to measure the weight of the cooking pot by means of the scale, and preferably wherein the controller is configured to determine, based on the weight of the cooking pot measured by the scale, a measured amount of an ingredient dispensed from the ingredient dispenser.

It is further preferred that the controller is configured to control the ingredient dispenser based on at least the amounts of ingredients indicated by the meal recipe and the weight of the cooking pot measured by the scale during dispensing of the amounts of ingredients by the ingredient dispenser, such that the ingredient dispenser is controlled by the controller by means of closed-loop control.

The moving mechanism preferably comprises a pivotable arm, configured to be pivotable between an engaging position wherein it engages, either directly or indirectly, the cooking pot, and a disengaged position, wherein it does not engage the cooking pot. In the engaging position the cooking pot preferably rests on one end of the arm. Preferably, an actuator moves pivots the arm from the engaging position to the disengaged position, and vice versa, preferably by actuating the other end of the arm. Preferably, the scale is incorporated in the one end of the arm, such that in the engaging position the cooking pot rests on the scale. It is preferred that the cooking pot is attached to a - preferably vertical - rod, which movably rests in a pipe which is preferably coaxial with the rod. As mentioned above, the rod may also comprise driving means or engaging means configured to engage with external driving means in order to rotate the cooking pot about its rotation axis. Preferably, the pivotable arm engages the rod in the engaging position. It is further preferred that, in the engaging position, the arm lifts the rod disposed within the pipe, such that the weight of the cooking pot and the rod, and possible content of the cooking pot, such as the ingredients, is fully carried by the arm, i.e. the cooking pot and its contents rest on the arm. Preferably, the pipe comprises, at its lower end, a stopping means configured to engage with at least a part of the rod, such that, at least in the disengaged position of the arm, the stopping means carry the weight of the cooking pot. Preferably, the pivotable arm is communicatively coupled to the controller, e.g. through the actuator, such that the controller may control the movement of the arm between the engaging position and the disengaged position. Preferably, the controller causes the pivotable arm to move to the engaging position before dispensing the ingredients by means of the ingredient dispenser.

It is preferred that the scale is calibrated before dispensing of the ingredients, such that the weight of the ingredients dispensed thereafter may effectively be measured. Preferably, the controller stores the weight measured by the scale after dispensing of the ingredients by means of the ingredient dispenser in the memory or in a further storage device. The scale may be calibrated after dispensing of each type of ingredients comprised in the meal. Alternatively, the controller may be configured to store intermediate values of the weight measured by the scale and to calculate the weight of each type of ingredient by means of the intermediate values. For instance, the scale may calibrate before dispensing starts, after which a first type of ingredient is dispensed up to a first weight, and subsequently a second type of ingredient is dispensed up to a second weight. Accordingly, the controller may be configured to derive that the second type of ingredient dispensed has a weight of the second weight subtracted by the first weight.

Alternatively, the ingredient dispenser may dispense the ingredients on an ingredient tray, wherein the scale is configured to measure the weight of the ingredient tray, after which the ingredient tray may for instance dispense the ingredients in the cooking pot. The above features may all be combined with this alternative example.

In a further example of the automated meal preparation apparatus, the controller is communicatively coupled to the driving means, and the controller is further configured to control the driving means such that each cooking pot of the plurality of cooking pots is respectively conveyed to a subsequent station of the plurality of stations after a predetermined time interval has elapsed, such that each cooking pot is conveyed to all of the plurality of stations within a meal preparation time, being a multiple of the predetermined time interval. By having predetermined time intervals in which the cooking pots are, respectively, conveyed to a subsequent station, a highly predictable continuous cooking process is obtained with the automated meal preparation apparatus of the present invention. The timed control of the driving means ensure that after each predetermined time interval, a meal is ready to be served at the serving station (after the start-up sequence has been completed, i.e. from the first time heated ingredients are dispensed at the serving station after start-up). The controller may control the ingredient dispenser(s) and heating element(s) in such manner that each meal is prepared within said meal preparation time.

In a further example of the automated meal preparation apparatus, it further comprises a conveyor system configured to convey the meal container to and from the serving station. For instance, after dispensing the meal in the meal container, it may be conveyed to e.g. a pickup area or a storage area. After the meal has been dispensed from the cooking pot, preferably in a meal container, the meal must be moved to a different location. For instance, a subsequent meal may need to be dispensed from the cooking pot such that said meal must be conveyed to a different location. The conveyor system may comprise a conveyor belt, a robotic arm, a ball transfer conveyor, or the like. The conveyor system may further comprise a sorting element configured to ensure that the meal is conveyed to the appropriate location. The sorting element may further be communicatively coupled with the controller such that the controller may, based on information about the order, activate the sorting element accordingly. The sorting element may be a ball transfer conveyor or a switching element (such as a paddle) or an actuator or the like. The conveyor system may comprise a first conveyor disposed approximately at the dispensing position of the cooking pot (e.g. the serving station) and/or the dispensing position of the automated meal container dispenser, such that after preparation of the meal the meal is received on the first conveyor, for instance in a meal container. The first conveyor may be multidirectional, such as a bidirectional conveyor belt or a ball transfer conveyor. The first conveyor may be able to effect movement of the meal in a plane and/or a volume, i.e. two-dimensional and/or three-dimensional movement. The first conveyor may convey the meal to a second or third conveyor which conveys the meal to a pickup area or a storage area or the like. The first conveyor may transfer the meal to the second or third conveyor by means of, for instance, its multidirectional movement or the aforementioned sorting element, or both.

In a further example of the automated meal preparation apparatus, it further comprises a cooling system configured to cool down the meal after preparation. Regulations for the food industry dictate that meals must be prepared according to certain requirements. For instance, prepacked meals are required to be cooled after preparation to a certain temperature within a certain time. By adding a cooling system to the meal preparation apparatus, a prepacked meal may quickly be cooled after preparation in order to meet the safety regulations for the food industry. The cooling system may be a cooling tunnel and is preferably part of a storage area and/or the conveyor system. Preferably, the conveyor system conveys the meal, being a prepacked meal, through the cooling tunnel in order to cool down the meal for the storage area. The cooling system may further comprise a temperature sensor configured to measure the temperature of a meal passing through the cooling system. Preferably, the cooling system and temperature sensor are communicatively coupled to the controller, such that the controller may control the cooling system on the basis of the temperature of the meal passing through the cooling system measured by the temperature sensor. Preferably the cooling system and/or conveyor system and/or storage area comprises at least one ingredient dispenser. Preferably, said ingredient dispenser is a non-heated ingredient dispenser. For example, said ingredient dispenser may dispense pre-cooked products, such as rice or pasta, which may be added to a meal which is already cooled down by the cooling system. Food safety regulation dictate that foodstuffs may only be heated a certain number of times. Therefore, by not cooking certain pre-cooked products again in the cooking pot, the shelf life and safety of the prepacked meals are increased.

In a further example of the automated meal preparation apparatus, it further comprises a packing system configured to package the meal such that after the meal is packaged the contents of the meal cannot be altered without tampering with a packaging material used for the packaging of the meal. According to food safety regulations a prepacked meal must - before or after cooling, as mentioned above - be packaged in a manner in which the contents of the meal cannot be altered without tampering with the packing material. In other words, after packaging of the meal the contents of the meal can only be altered by altering the packing material, e.g. partially removing the packing material or piercing the packing material or the like. The meal preparation apparatus therefore preferably comprises an automated packing system configured to pack the meal, as described above. Preferably, the conveyor system and/or a storage area comprise the packing system, and preferably the meal is conveyed to the packing system before or after being conveyed through the cooling system, such that the meal is packaged by the packing system before or after being cooled down by the cooling system. The packing system may comprise a printer (described below) such that the packing material of the meal may be provided with printed information by the printer after packaging the meal.

In a further example of the automated meal preparation apparatus, it further comprises a printer communicatively coupled to the controller and configured to print information associated with the meal, the printed information comprising at least one of:
- a user associated with the meal, a vendor associated with the meal, a logo of the vendor, a QR-code or bar code associated with the meal, an address of the user and/or the vendor, ingredients associated with the meal, amounts of ingredients associated with the meal, a best-before date associated with the meal, nutritional values of ingredients, list of at least part of the ingredients associated with the meal, a gross weight of the meal, and a net weight of the meal.

Preferably, the information further comprises at least one of:
- measured amounts or weights of ingredients associated with the meal based on weight measurements of the scale, calculated nutritional values based on the measured amounts or weights of ingredients.

The meal preparation apparatus may comprise a plurality of printers, such as label printers. Preferably, the printer is positioned or positionable in such manner that the information is directly disposed on the meal, or its meal container. Alternatively or additionally, a printer may be provided near or on the automated meal container dispenser, such that the dispensed container may be provided with the printed information upon dispensing of the meal container by the automated meal container dispenser. Preferably, the controller is further configured to calculate nutritional values of the ingredients in the meal based on the amount of ingredients dispensed by the ingredient dispenser and stored information regarding the nutritional values of a certain ingredient per amount, e.g. per kilogram or the like. The amount of ingredients dispensed by the ingredient dispenser is preferably determined by weighing the cooking pot during dispensing of the ingredients by means of the scale. The printer may be a label printer, laser printer, stamp printer, punch printer, etch printer, 3D-printer, or any other printer suitable for printing information on the meal or its meal container or its packing material or the like. According to the aforementioned regulations, the nutritional values printed on the meal are required to be within a certain margin from the real nutritional values of the meal. As ingredient dispensers are not always accurate enough, the measured numbers, amounts or weights of ingredients associated with the meal based on weight measurements of the scale are preferably used to calculate the nutritional values.

The present invention will further be elucidated by a description of the appended drawings. These drawings are schematic representations of specific embodiments according to the invention. Hence, said drawings are in no way to be considered limiting to the scope of the appended claims.

The appended drawings comprise a number of figures, wherein:
- Figure 1 depicts a plan view, i.e. top view, of a preferred embodiment of a meal preparation apparatus according to the invention, i.e. a floor plan thereof;
- Figure 2 depicts a plan view, i.e. top view, of an alternative embodiment of a meal preparation apparatus according to the invention, i.e. a floor plan thereof;
- Figure 3 depicts a parallel projection of the meal preparation apparatus according to Figure 2;
- Figure 4 depicts a parallel projection, from above, of an embodiment of a test setup for the meal preparation apparatus according to the invention;
- Figure 5 depicts a parallel projection, from below, of the embodiment of the test setup according to Figure 4;
- Figure 6 depicts a partial cross-sectional view of the test setup according to Figure 4 showing a first ingredient dispensing location;
- Figure 7 depicts a partial cross-sectional view of the test setup according to Figure 4 showing a second ingredient dispensing location;
- Figure 8 depicts part of the test setup according to Figure 4, which is partially transparent and shows a meal preparation location;
- Figure 9 depicts a schematic side view of the meal preparation location according to Figure 8;
- Figure 10 depicts a schematic side view of part of Figure 6, showing a weighing mechanism;
- Figure 11 depicts a schematic side view of the test setup according to Figure 4, showing a cleaning and dispensing location in a dispensing state; and
- Figure 12 depicts a schematic side view of the test setup according to Figure 4, showing a cleaning and dispensing location in a cleaning state.

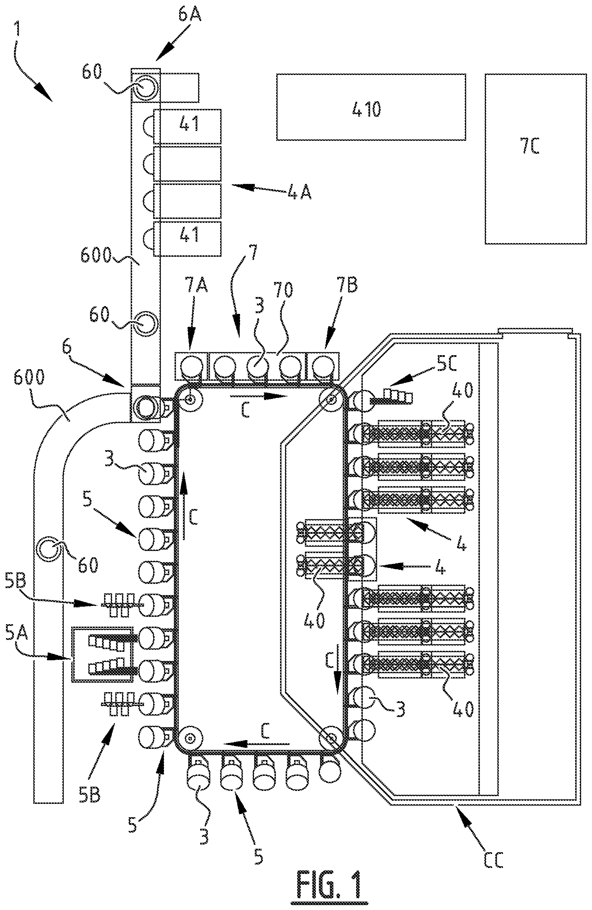

In Figure 1 a floor plan of a preferred meal preparation apparatus 1 according the present invention is shown. The apparatus 1 comprises a plurality of cooking pots 3, which are carried and conveyed along a closed-loop conveyor rail 2. The cooking pots 3 are conveyed along the rail 2 in a conveying direction C, which is in this case clockwise. Along the rail 2, several separate and sequential stations are positioned. The cooking pots 3 are each conveyed along the rail 2, successively to each of these stations in the conveying direction C. The apparatus 1 comprises a cooling chamber CC, which provides cooling in its enclosure. Ingredient dispensing stations 4, and thus ingredient dispensers 40 are located within the cooling chamber CC, in order to keep the raw ingredients therein at a proper temperature. An oil dispensing station 5C is also located in the cooling chamber CC. The oil dispensing station 5C is configured to provide oil in the cooking pots 3 after these have been cleaned by the cleaning station 7, and before new ingredients are dispensed in said cooking pots 3 at the ingredient dispensing stations 4. As the cooking pots 3 pass the oil dispensing station 5C and the ingredient dispensing stations 4, they are cooled, as they are contained within the cooling chamber CC during that time. Additionally, the oil dispensing station 5C may be configured to dispense a sauce and/or seasoning in the cooking pots 3 in addition to the oil.

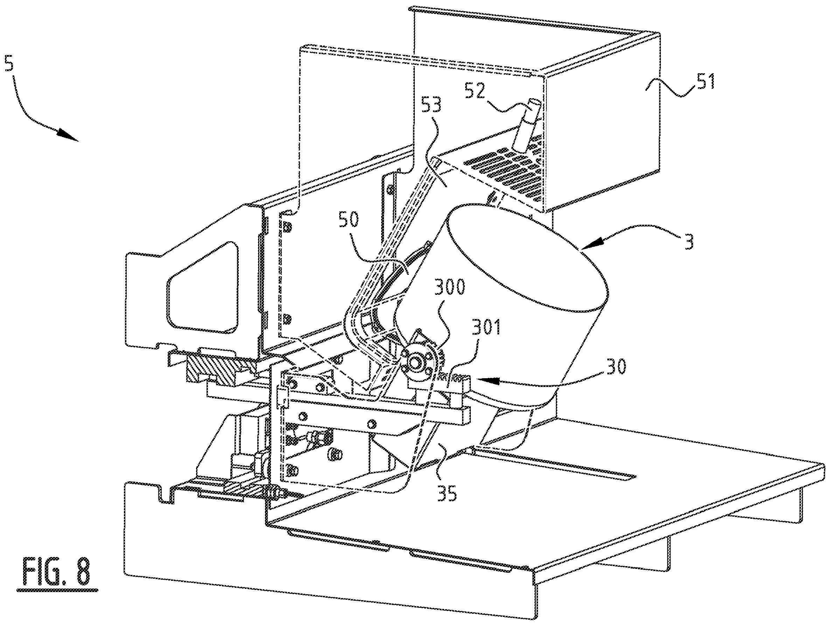

Still referring to Fig. 1, as the cooking pots 3 exit the cooling chamber CC in the conveying direction C, they pass multiple preparation stations 5, where the cooking pots 3 and the ingredients therein are heated by heating elements 50 (see e.g. Fig. 8). After being heated by a number of preparation stations 5, the cooking pots 3 are conveyed to one or more spice dispensing stations 5B, which are configured to dispense (dried) spices and/or herbs in the cooking pots 3 during the cooking process, i.e. during preparation. A spice dispensing station 5B may comprise a heating element to keep the continue the preparation process. The cooking pots 3 are also conveyed to a sauce dispensing station 5A, which is configured to dispense sauce in the cooking pots 3.

After the cooking pots 3 have been heated sufficiently at the preparation stations 5, they are conveyed, in the conveying direction C, to a serving station 6. At the serving station 6, the cooking pots 3 are tilted so as to dispense the prepared ingredients from the cooking pots 3 in a meal container 60 positioned at the serving station 6. The meal container 60 is then conveyed along a conveyor belt 600. The meal container 60 may be dispensed from an automatic meal container dispenser 6A, located upstream from the serving station 6 along the conveyor belt 600. After being dispensed by the automatic meal container dispenser 6A, the meal container 60 may be provided with additional food articles, such as carbohydrate-rich food articles, which may or may not be pre-prepared. The additional food articles are provided in the meal container 60 at an additional food dispensing station 4A, comprising additional food dispensers 41. The additional food articles may be, for instance, pre-cooked rice, pasta, et cetera. If the additional food articles are pre-prepared, they may be pre-prepared at a carb preparation unit 410. After being provided with the additional food articles, the meal container 60 is conveyed along the conveyor belt 600 to the serving station 6. The direction in which the conveyor belt 600 moves is downward (as seen in Fig. 1), i.e. from the meal container dispenser 6A, past the serving station 6, and further to the end of the conveyor belt 600.

When the prepared ingredients are dispensed from the cooking pot 3 into a meal container 60 at the serving station 6, the cooking pot 3 moves to a dumping station 7A, where possible residue from the ingredients is dumped in a container or the like. This dumping may for instance be effected by tilting the cooking pot 3 upside down (e.g. with a tilt angle of about 180°). Thereafter the cooking pots 3 move to the cleaning station 7, where they are cleaned by the cleaning system 70. After being cleaned, the cooking pots 3 move to a drying station 7B, where the cooking pots are dried, e.g. by means of hot air. The cooking pots 3 then, again, move in the conveying direction C, into the cooling chamber CC, to the oil dispensing station 5C, ingredient dispensing stations 4, et cetera. In other words, after having been cleaned and dried at the cleaning station 7 and drying station 7B, the cooking pots 3 are ready to prepare a next meal, and thus move on to the ingredient dispensers 40 to receive new ingredients for the next meal.

The apparatus 1 may also comprise a service unit 7C, which may be utilized for cleaning of components of the apparatus 1, maintenance on components of the apparatus 1, or other tasks associated with the meal preparation apparatus 1 or the meal being prepared therewith. Additionally, or alternatively, the service unit 7C may comprise dishwashing means, such that meal containers 60, such as plates, may be cleaned and prepared to be loaded in the automatic meal container dispenser 6A.

The apparatus 1 of Fig. 1 thus provides a highly efficient, hygienic, and fully automated meal preparation process, with minimal interference from human operators or the like.

Details of the apparatus 1, and an alternative embodiment of the apparatus 1, will be elucidated by the following figures.

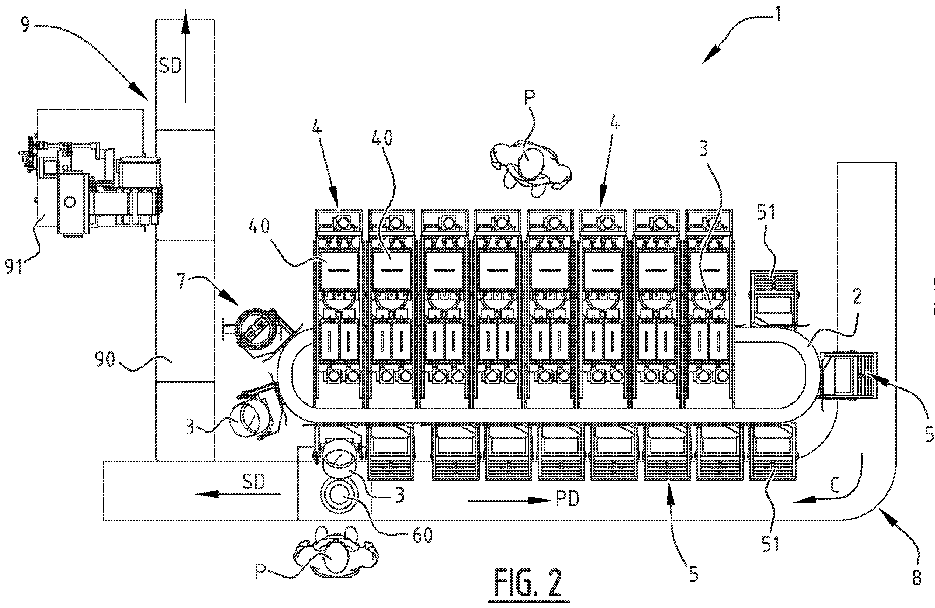

In Figure 2 a floor plan, i.e. plan view, of an alternative embodiment of a meal preparation apparatus 1 is shown. Any element of the apparatus 1 of Fig. 2 may naturally be employed in the apparatus 1 of Fig. 1 as well, and vice versa. The apparatus 1 comprises a closed-loop rail 2 which supports a plurality of cooking pots 3. Meals, for instance direct-consumption or prepacked meals, can be cooked in the cooking pots 3. The cooking pots 3 are conveyed along the closed-loop rail 2 in order to pass by a variety of stations (may also be called "locations"). The conveying direction C is clockwise in the plan view shown in Fig. 2. The meal preparation process starts at a number of ingredient dispensing stations 4, which comprise ingredients dispensers 40 positioned above the rail 2, such that when a cooking pot 3 is positioned below an ingredient dispenser 40, ingredients may be dispensed in the cooking pot 3. Accordingly, the ingredients required to form a meal may be deposited in the cooking pots 3, after which the ingredients may be heated, e.g. cooked. The ingredients in the cooking pots 3 may be heated at preparation stations 5 along the rail 2. The preparation stations 5 are provided with heating elements 50 (see e.g. Fig. 8) configured to heat the ingredients in the cooking pots 3. As fumes, such as smoke or vapor, may be generated during the heating process, the preparation stations 5 are also provided with extractor hoods 51, which may be passive or active extractor hoods 51. The extractor hoods 51 ensure that the environment and air surrounding the apparatus 1 remains safe and clean for persons P in the vicinity of the apparatus 1. When the ingredients in the cooking pot 3 are heated to a sufficient extent, the pots 3 are conveyed along the rail 2 to a dispensing station 6, which follows the preparation stations 5. At the dispensing station 6 the cooking pot 3 may be tilted in order to dispense the meal from the cooking pot 3 into a meal container 60 positioned at the dispensing station 6 by means of gravity. After the dispensing station 6 the pot 3 is further conveyed to a cleaning station 7 which is configured to clean the pot 3. During the cleaning process the pot 3 is tilted substantially upside down, such that it may be cleaned from below by at the cleaning station 7. A cleaning system 70 is provided at the cleaning station 7, which is positioned at a height lower than the rail 2, such that the cleaning system 70 may clean the pot 3 from below.

Further, still referring to Fig. 2, the apparatus 1 comprises a pickup area 8 and a storage area 9. When a meal is dispensed at the dispensing station 6 into a meal container 60 it will be conveyed to either the pickup area 8 or the storage area 9, depending on the intended use of the meal. In the case of a meal for direct distribution, the meal container 60 is conveyed to the pickup area 8 in a pickup direction PD. Customers that ordered said meal or an operator may collect the meal container 60 containing their meal along the pickup area 8. In the case of a meal for later distribution, the meal container 60 may be conveyed to the storage area 9 in a storage direction SD. According to food safety regulations, the meal may firstly be cooled by a cooling system, being a cooling tunnel 90, to a certain prescribed temperature within a prescribed time. After cooling in the cooling tunnel 90 the meal is packaged by a packing system 91. Naturally this order may be reversed, i.e. packaging the meal before cooling. The packing system 91 packages the meal in such manner that the content of the meal cannot be altered without tampering with the packing material in which the meal is packed. The meal container 60 may be part of the packing material. After cooling and packaging of the meal, the meal is conveyed further to a storage room, table, cabinet or the like (not shown).

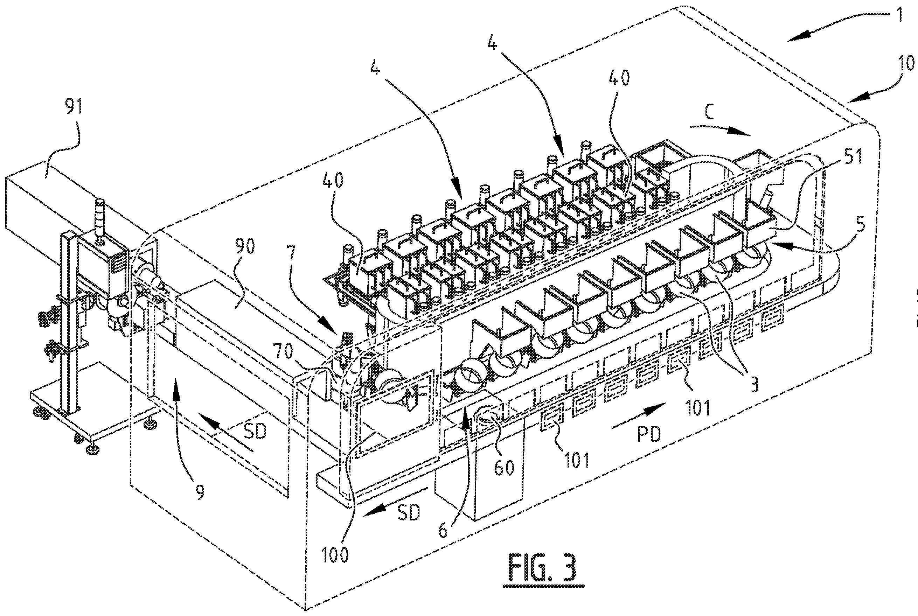

Turning to Fig. 3, it can be seen, in dotted lines, that the meal preparation apparatus 1 is enclosed in a housing 10. The housing 10 ensures that unauthorized persons cannot enter the apparatus 1, such that the meal preparation process cannot be tampered with. The housing 10 is equipped with a display 100, which may be a television monitor or the like, which may show information regarding the meal being prepared. Alternatively or additionally, the display 100 may be a touch-sensitive display 100 configured to be an input device for the apparatus 1. For instance, a person P may select a certain type of meal on the display 100, which may be customizable in terms of ingredients and amounts thereof, such that the apparatus 1 is instructed by the controller which controls the apparatus 1 to prepare said certain type of meal. Alternatively or additionally, the apparatus 1 may comprise another input device, such as a separate touchpad or a separate keyboard or the like.

Still referring to Fig. 3, when a meal for direct distribution is dispensed in the meal container 60 and being conveyed in the pickup direction PD, the meal container 60 passes a number of information screens 101 configured to display information regarding the meal container 60 located at the specific screen 101. Accordingly, customers or operators of the apparatus may track the meal container 60 along the pickup area 8 as it passes the screens 101. For instance, a meal may be associated with a certain order number or order name, which may be displayed on the screen 101 as the meal container 60 associated with the order passes the screen 101.

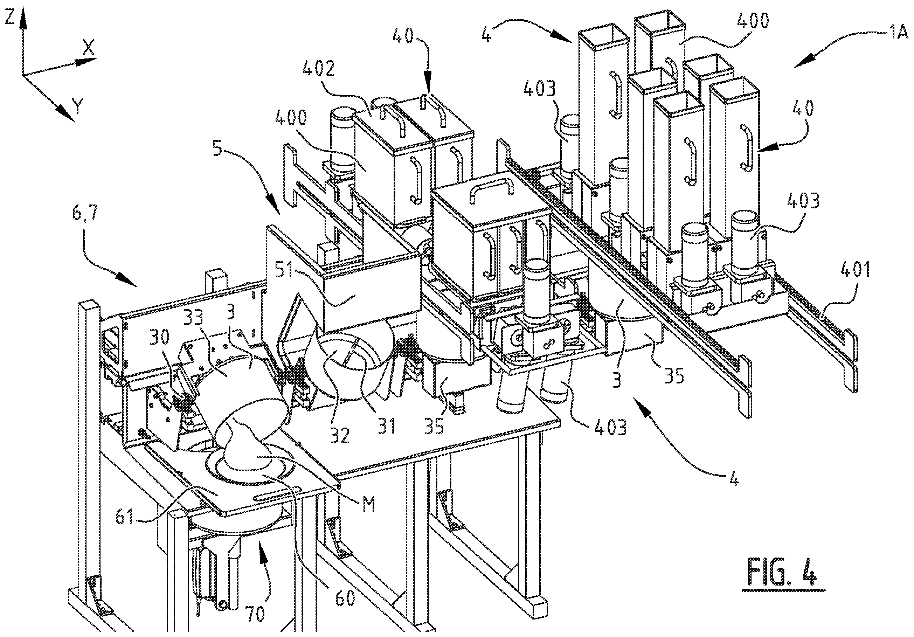

Fig. 4 depicts a test setup 1A of a meal preparation apparatus 1. On the right side of the drawing a number of ingredient dispensers 40 are shown. The ingredient dispensers 40 are located above cooking pots 3 such that ingredients may be dropped from the dispensers 40 into the pot 3. The dispensers are equipped with food containers 400 containing a certain ingredient, or combination of ingredients, which may be dispensed therefrom. Ingredient dispensers 40 may be movable in the Y-direction along a positioning rail 401. The positioning rail 401 positions a certain food container 400 above the cooking pot 3 as needed. Accordingly, a larger number of ingredients may be dispensed at one dispensing location, saving space in the X-direction. Dispensers 40 may also be supported in a fixed manner, or may be movable in another manner. The containers 400 may be provided with closing lids 402 to close off the ingredients from the environment. This may particularly be important for ingredients which are easily spoiled, such as meats or the like. The dispensers 40 further comprise dispenser motors 403 by means of which the dispensers 40 are driven so as to dispense ingredients.

It is shown that the cooking pots 3 comprise a tilting mechanism 30, which enables the cooking pot 3 to be tilted to various tilting angles. For instance, at the ingredient dispensing location 4 the pots 3 are upright, corresponding to a tilt angle of approximately 0 degrees. At the preparation location 5, i.e. preparation station 5, the pot 3 is slightly tilted, e.g. to a tilt angle of 30 to 60 degrees. In the test setup 1A the dispensing location 6 and cleaning location 7 are combined. Accordingly, the pot 3 may be tilted to 90 degrees or more in order to dispense the meal M onto the meal container 60. During cleaning the pot 3 may be tilted even more, in order to be substantially tilted upside down (e.g. a tilt angle of substantially 180 degrees), such that the cleaning system 70 may effectively clean the pot 7.

With reference to the preparation station 5 of Fig. 4, the pot 3 is tilted during the heating of the ingredients in the pot 3 at the preparation station 5. The cooking pot 3 is configured to rotate about a rotation axis, corresponding to an axis coaxial with the cylindrical wall 33 of the pot 3. The tilt during the heating process enables increase tumbling of the ingredients during cooking - due to the rotation of the pot 3 - such that the ingredients are heated evenly and such that the ingredients do not stick to the interior surface of the pot 3. In order to provoke additional tumbling, the cooking pot 3 is equipped with a passive mixing fin 31, which protrudes upwards from and extends along part of the base 32 of the pot 3. During rotation of the tilted pot 3, the fin 31 scoops up part of the ingredients, which eventually tumble down from the fin 31 due to gravity. The fin 31 therefore ensures proper mixing of the ingredients of the meal M and ensure that the ingredients are evenly heated and/or not burned.

In the test setup 1A according to Fig. 4, the cleaning station 7 and dispensing station 6 are combined. When the meal M has been dispensed onto the meal container 60, a sliding tray 61 moves forward (in positive Y-direction) such that the cleaning system 70 appears below the pot 3. The pot 3 may then be tilted to an upside down position, having a tilt angle of approximately 180 degrees, after which the pot 3 may be cleaned by the cleaning system 70.

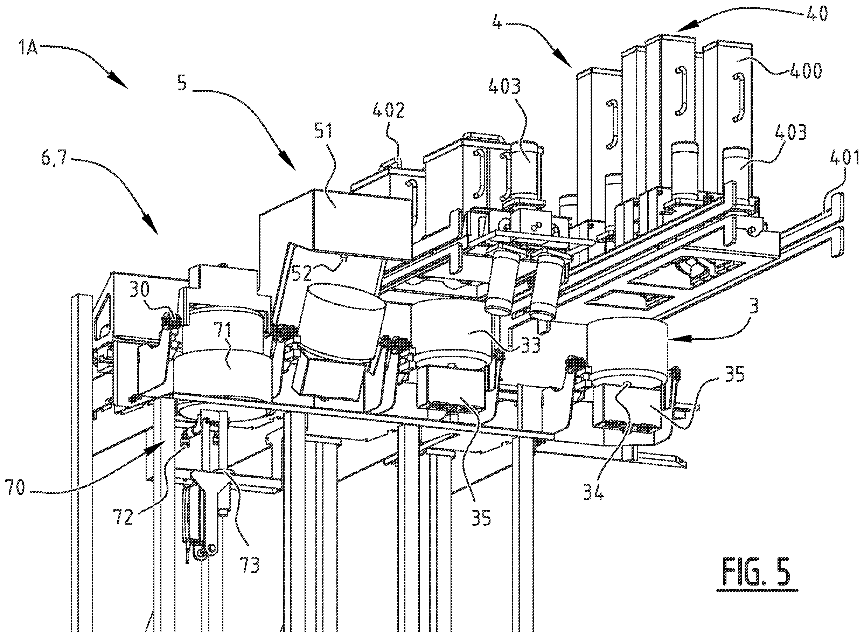

Fig. 5 shows another view of the test setup 1A according to Fig. 4, wherein at the cleaning 7 and dispensing 6 location, the cleaning system 70 is activated. As seen on the left side of the drawing, the pot 3 is tilted substantially upside down, i.e. having a tilt angle of approximately 180 degrees, such that the interior of the pot 3 is accessible to the cleaning system 70. The cleaning system 70 comprises a splash screen 71, which is actuated to an elevated position when the pot 3 is cleaned, as shown in Fig. 5. The splash screen 71 ensures that waste water and/or foodstuffs and/or cleaning solutions do not splash away from the cleaning system 70 and cooking pot 3, such that they are collected within the cleaning system 70 (mostly by means of gravity) and drained through the drain. The drain is positioned at the base of the splash screen 71 and drains the waste to another location (not shown), such as the sewer or a septic tank or the like. The splash screen 71 is supported on a lifting actuator 73, configured to lift the splash screen 71 to the elevated position, so as to partially enclose the cooking pot 3. During the cleaning process at the cleaning station 7 the cooking pot 3 may rotate in order to allow the cleaning system 70 to effectively clean the pot 3.

Referring again to Fig. 5, the cooking pot 3 further comprises a rotation mechanism 35 configured to rotate the pot 3 about its rotation axis as mentioned above. The rotation mechanism 35 comprises a motor configured to engage with a support rod 34 of the cooking pot 3. The support rod 34 may optionally comprise engagement means configured to engage with mutually compatible engagement means of the motor.

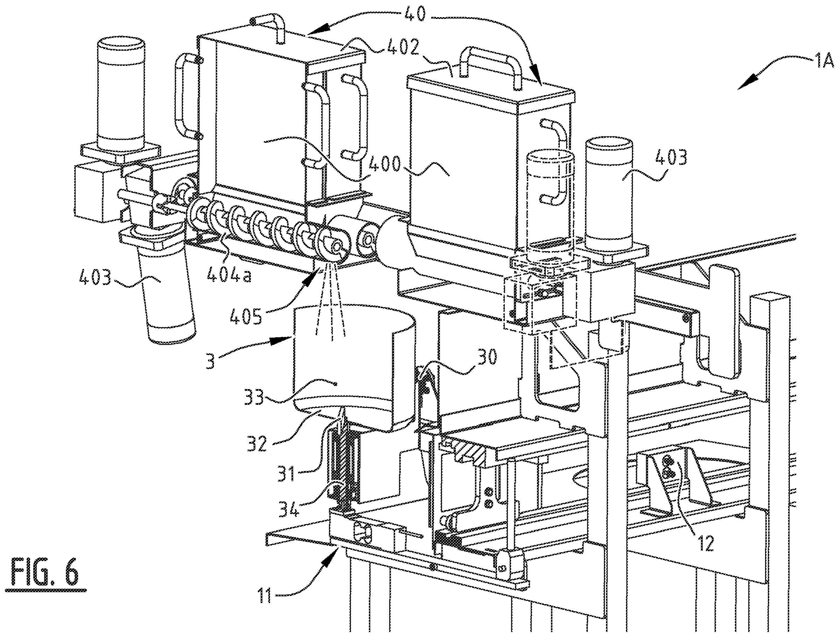

Fig. 6 shows a partial cross-sectional view of a part of the test setup 1A according to Figs. 4 and 5. The depicted ingredient dispenser 40 is partially cut open in this view in order to show its interior. The ingredient dispenser 40 of Fig. 6 comprises a screw conveyor (also known as "auger conveyor") 404a, which is configured to receive an ingredient contained in the food holder 400 of the dispenser 40. Upon rotation of the screw conveyor 404a the ingredient is transported horizontal direction, by the helical surface of the screw conveyor 404a, to an outlet 405 of the dispenser 40, such that the ingredient is dispensed in the pot 3. Each screw conveyor 404a is driven by a dispenser motor 403. Essentially, the screw conveyor 404a converts a rotational motion of the dispenser motor 403 to a linear horizontal motion of the ingredient.

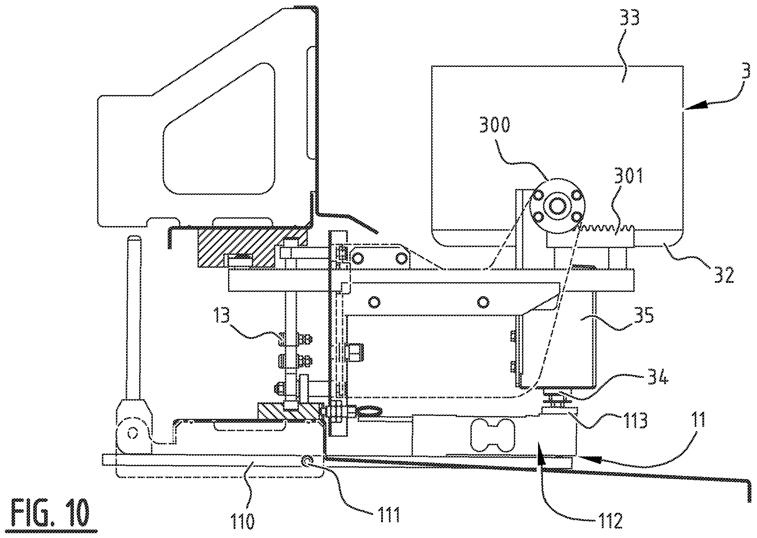

It is noted that Fig. 6 shows a weighing device 11 configured to measure the weight of the cooking pot 3, which is described in further detail in view of Fig. 10.

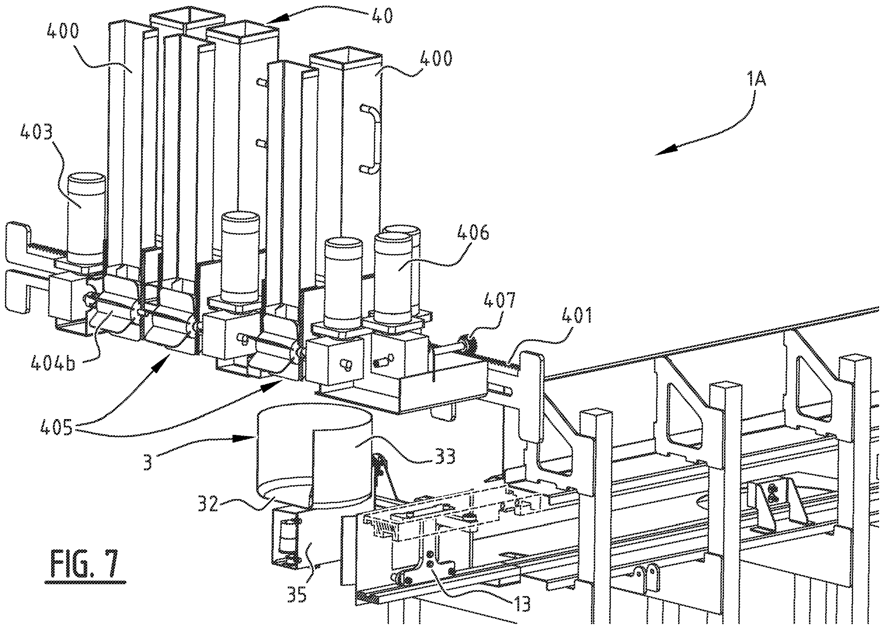

Fig. 7 shows a partial cross-sectional view of a part of the test setup 1A according to Figs. 4 and 5. The depicted ingredient dispenser 40 is partially cut open in this view in order to show its interior. The ingredient dispenser 40 of Fig. 7 comprises a rotary valve 404b, which is configured to receive an ingredient contained in the food holder 400 of the dispenser 40. Upon rotation of the rotary valve 404b the ingredient is transported by the vanes of the rotary valve 404b in a vertical direction, such that the ingredient is dispensed downwardly into the cooking pot 3. Each rotary valve 404b is driven by a dispenser motor 403. Essentially the rotary valve converts a rotational motion of the dispenser motor 403 into a linear vertical movement of the ingredient. The ingredient dispensers are - as mentioned above - movable along a positioning rail 401, which comprises a linear gear. The linear gear of the positioning rail 401 engages with a driving gear 407 of the dispenser 40, which in turn is driven by a positioning motor 406. Accordingly, a rotational motion of the positioning motor 406 is translated to a linear motion of the dispenser 40 along the positioning rail 401.

Fig. 7 further shows a power contact 12 which may engage with conducting contacts 13 of the cooking pot 3. Accordingly, the cooking pot 3 may be provided with electrical power from the power contact 12, via the conducting contacts 13, in order to drive the rotation mechanism 35 so as to rotate the cooking pot 3 about its rotation axis.

In Fig. 8 a partial cross-sectional view of the preparation station 5 of the test setup 1A is shown. As explained above, during heating of the ingredients in the cooking pot 3 the pot 3 is somewhat tilted by means of the tilting mechanism 30. The tilting mechanism 30 is formed by a rack and pinion comprising a circular gear (i.e. pinion) 300 connected to the pot 3 and a linear gear (i.e. rack) 301 which engages the teeth of the pinion 300. By horizontal movement of the rack 301, the pinion 300 tilts the cooking pot 3.

Referring to Fig. 8, the preparation station 5 comprises a heating element 50, which is an induction element 50. The cooking pot 3 is configured to be heated by means of an induction element 50 such that the ingredients in the pot 3 may be indirectly heated by the induction element 50. In order to protect the rest of the apparatus 1 from the heat of the cooking pot 3 a heat shield 53 is installed behind the cooking pot. Further, it is noted that the preparation station 5 comprises a temperature sensor 52, being an infrared sensor 52, which measures the temperature of the pot 3 and/or ingredients in the pot. The heating element 50 may be controlled by the controller of the apparatus 1 based on the measurements of the temperature sensor 52.

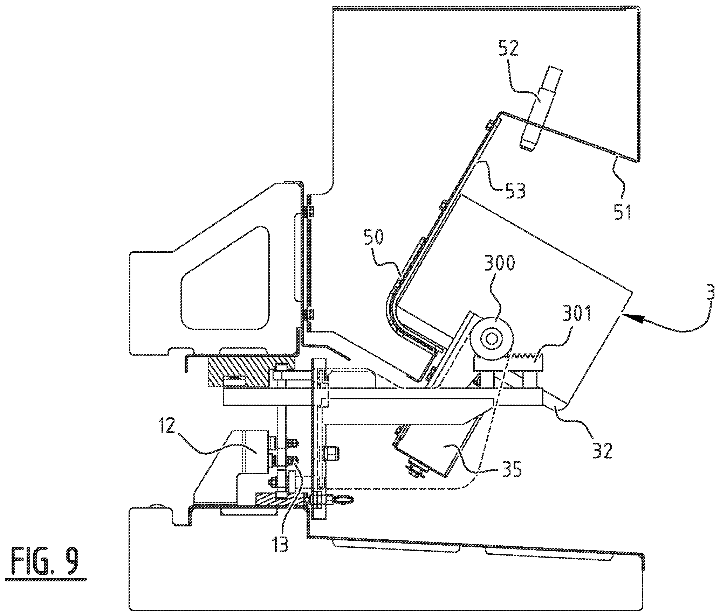

Fig. 9 shows a schematic side view of the preparation station 5 of Fig. 8. It can be seen that the induction element 50 sits relatively close to the cooking pot 3 in order to effectively transmit heating energy to the cooking pot 3. The induction element 50 can be a bent induction element 50 as shown in Fig. 9, such that it is directed at both the side wall 33 of the pot 3 as well as the base 32. In Fig. 9 it is shown that the power contact 12 (e.g. a brush contact) contacts the conducting contacts 13 of the cooking pot 3, such that electrical power is transmitted from the power contact 12, through the conducting contacts 13, to the motor of the rotation mechanism 35. It is noted that the rack 301 of the tilting mechanism 30 may be moved in horizontal direction, both to the right and to the left side, in order to tilt the pot 3 by engaging with the pinion 300. The rack 301 may be moved by an actuator, or the rail 2 of the apparatus 1 can be formed such that the rack 301 is forced to move relative to the cooking pot 3 when it passes a certain station. For instance, the rail 2 of the apparatus 1 may be formed such that, just before arriving at the preparation station 5, the rack 301 is forced backwards (towards the rail 2) such that the cooking pot 3 tilts to the required tilt angle for heating. The rack 301 may also be forced to move by a separate guide rail, running along the closed-loop rail 2. Said guide rail may locally have varying distance to the closed-loop rail 2 in order to tilt the cooking pot 3. For instance, at the preparation station 5, the guide rail may locally move away from the rail 2 and the cooking pot 3 in order to tilt the cooking pot 3 at the preparation station 5 as desired.

A schematic side view of the weighing device 11 is shown in Fig. 10. The scale 11 is preferably placed at least at a dispensing station 4 such that the weight of the cooking pot 3 may be monitored during dispensing of the ingredients. Accordingly, the amount, number or weight of dispensed ingredients may be accurately determined by weighing. The weighing device 11 comprises a pivotable arm 110, which can pivot about a pivot axis 111. A scale 112 is attached to the arm 110, which has a contact pad 113 configured to receive an object in order to weigh the object. Fig. 10 shows the arm 110 in an engaging position, wherein it causes the contact pad 113 to engage the support rod 34 of the cooking pot 3. The support rod 34 is movable in its casing such that the cooking pot 3 may be lifted up by the pivotable arm 110 by engaging with the support rod 34. Accordingly, in the engaging position the pot 3 rests, with its rod 34, on the contact pad 113 of the scale 112. Hence, the weight of the cooking pot 3 may be measured in the engaging position. When the weight measurement is conducted, the pivotable arm 110 may pivot to a disengaged position, wherein the contact pad 113 does not contact the support rod 34 of the pot 3. The pivotable arm 110 can be pivoted around the pivot axis 111 by means of an actuator which engages the arm 110.

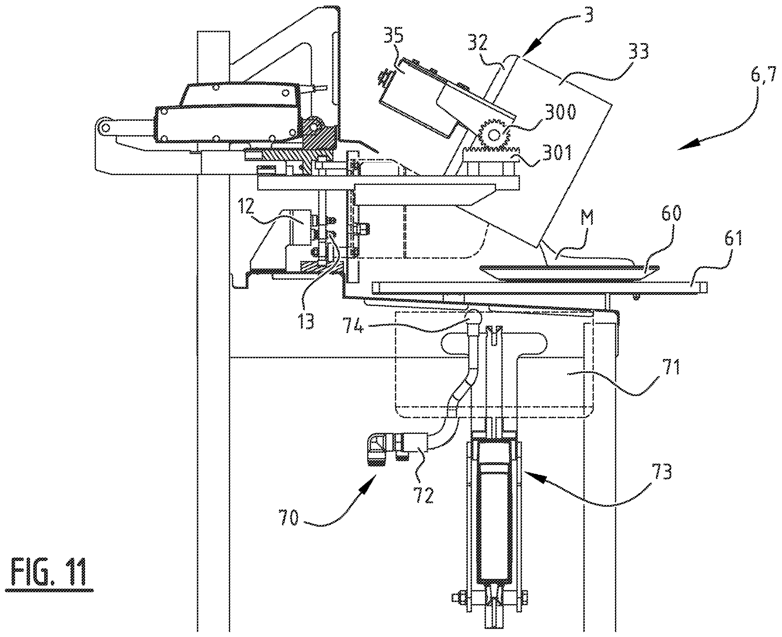

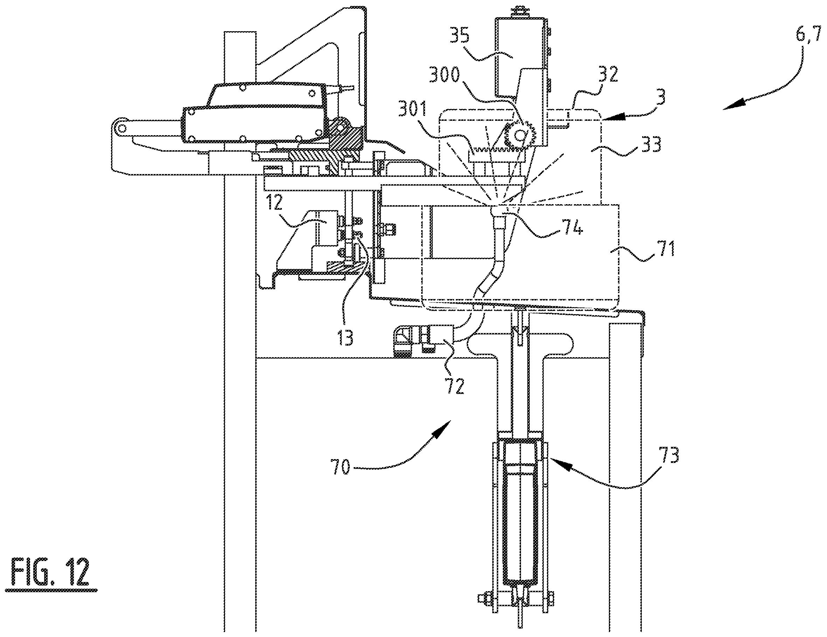

Fig. 11 depicts a schematic side view of the test setup according to Figure 4, showing a cleaning 7 and dispensing 6 location in a dispensing state. In the dispensing state the cooking pot 3 is tilted to a tilt angle of more than 90 degrees, such that the meal M may be dispensed from the cooking pot 3 onto the meal container 60, which rests on the sliding tray 61. The cleaning system 70 is disposed below the sliding tray 61, such that it does not interfere with the dispensing process. As mentioned above, the lifting actuator 73 is configured to lift the splash screen 71 upwards, relative to the position shown in Fig. 11. The cleaning system 70 comprises a conduit 72 connected to a nozzle 74. The conduit 72 may be configured to provide water and/or a cleaning solution to the nozzle 74 such that the nozzle 74 may spray said water and/or said cleaning solution upwards towards the cooking pot 3. The cleaning process will further be described with reference to Fig. 12 below. It is further noted that the cooking pot 3 may be rotated during dispensing and/or cleaning, such that a power contact 12 must provide power, via the conducting contacts 13 of the pot 3, to the rotation motor of the rotation mechanism 35.

Fig. 12 depicts a schematic side view of the test setup according to Figure 4, showing the cleaning 7 and dispensing 6 location in a cleaning state. As mentioned before, during the cleaning process the cooking pot 3 is turned upside down, such that its interior may be cleaned by means of the nozzle 74 of the cleaning system 70. Further, the lifting actuator 73 of the cleaning system 70 raises the splash screen 71 so as to partially enclose the cooking pot 3 within the splash screen 71. Accordingly, waste water will not splash to the area surrounding the apparatus 1. The nozzle 74 is fed cleaning water and/or cleaning solution by the conduit(s) 72, wherein the conduit 72 preferably delivers the water and solution under pressure, such that additional pressurization devices are not required. During the cleaning procedure, the pot 7 is rotated about its rotation axis by means of the rotation mechanism 35, such that the nozzle 74 is able to reach substantially all areas of the interior of the wall 33 and base 32 of the cooking pot 3. Accordingly, the cooking pot 3 is adequately cleaned.

It is noted that the scope of the present invention is in no way limited by the above detailed description of the drawings, such that the scope of protection must be determined by the appended claims. In other words, the drawings merely represent exemplary embodiments according to the invention, and do not limit the scope of the present application in any way.

Additional features, not shown in the drawings, may naturally be added.

## Claims

1. Automated meal preparation apparatus (1) for preparation of meals, comprising:
a closed-loop conveyor rail (2) configured to support a plurality of cooking pots (3);
a tilting mechanism (30) configured to tilt each of the plurality of cooking pots (3) about a tilt axis substantially parallel to the bottom thereof, wherein a tilt angle of each cooking pot (3) about the tilt axis of 0° corresponds to an upright position of the cooking pot (3);
driving means configured to simultaneously convey the cooking pots (3) in a conveying direction (C) along the closed-loop conveyor rail (2) to a plurality of separate stations sequentially located along the closed-loop conveyor rail (2) and being stationary with respect thereto, the plurality of stations comprising:
an ingredient dispensing station (4) comprising an ingredient dispenser (40) configured to dispense ingredients in a cooking pot (3) of the plurality of cooking pots (3) conveyed to the dispensing station (4), in order to form at least part of a meal, comprising the ingredients, in said cooking pot (3),
a preparation station (5), located downstream from the ingredient dispensing station (4) in the conveying direction (C), and comprising a heating element (50) configured to heat the ingredients in a cooking pot (3) of the plurality of cooking pots (3) conveyed to the preparation station (5),
a serving station (6), located downstream from the preparation station (5) in the conveying direction (C), and comprising a dispensing mechanism configured to dispense the heated ingredients from a cooking pot (3) of the plurality of cooking pots (3) conveyed to the serving station (6), and
a cleaning station (7), located downstream from the serving station (6) and upstream from the ingredient dispensing station (4) in the conveying direction (C), and comprising a cleaning unit (70) configured to clean a cooking pot (3) of the plurality of cooking pots (3) conveyed to the cleaning station (7), by spraying water and/or a cleaning solution in the cooking pot (3); **characterised by**: the tilting mechanism (30) comprising a guide rail running along the closed-loop conveyor rail (2) and configured to engage, directly or indirectly, each of the plurality of cooking pots (3), wherein the tilting mechanism (30) at least partially controls the tilt angle of each cooking pot (3) along the closed-loop conveyor rail (2) by varying a distance between the guide rail and the closed-loop conveyor rail (2).

2. Automated meal preparation apparatus (1) of claim 1, further comprising:
a database configured to store meal recipes, wherein each meal recipe indicates ingredients, and a heating instruction comprising a heating time, a heating temperature, and/or a heating power; and
a controller communicatively coupled to the database, and the ingredient dispenser (40) and/or the heating element (50), wherein the controller is configured to control the ingredient dispenser (40) based on at least the ingredients indicated by each meal recipe, such that the ingredient dispenser dispenses the ingredients and the cooking pot (3) conveyed to the ingredient dispensing station receives the ingredients in order to form the meal in said cooking pot (3), and/or configured to control the heating element (50) based on at least the heating instruction, such that the ingredients in the cooking pot (3) conveyed to the preparation station (5) are heated according to the heating instruction.

3. Automated meal preparation apparatus (1) of claim 1 or 2,
wherein the tilting mechanism (30) is configured to tilt a cooking pot (3) of the plurality of cooking pots (3) conveyed to the ingredient dispensing station (4) to a tilt angle of between 0° and 90°; and
wherein the tilting mechanism (30) is configured to tilt a cooking pot (3) of the plurality of cooking pots (3) conveyed to the preparation station (5) to a tilt angle of between 0° and 90°; and
wherein the tilting mechanism (30) at least partially constitutes the dispensing mechanism, and is configured to tilt a cooking pot (3) of the plurality of cooking pots (3) conveyed to the serving station (6) to a tilt angle of between 90° and 180° in order to dispense the meal; and
wherein the tilting mechanism (30) is configured to tilt a cooking pot (3) of the plurality of cooking pots (3) conveyed to the cleaning station (7) to a tilt angle of between 90° and 270°, and more in particular about 180°, and the cleaning unit (70) is positioned at a height lower than the cooking pot (3).

4. Automated meal preparation apparatus (1) of any of the preceding claims, wherein each of the plurality of cooking pots (3) comprises:
a mixing fin (31) configured to mix the ingredients in the cooking pot (3);
a non-sticking and/or heat conducting material, preferably in the form of a coating; and
a rotation mechanism (35) configured to allow rotation of the cooking pot (3) about a rotation axis thereof, wherein the rotation mechanism (35) is mechanically drivable in order to rotate the cooking pot (3) about the rotation axis.

5. Automated meal preparation apparatus (1) of any of the preceding claims, wherein the closed-loop conveyor rail (2) extends at least partially through a cooling chamber (CC), and wherein the ingredient dispensing station (4) is located in the cooling chamber (CC).

6. Automated meal preparation apparatus (1) of any of the preceding claims, the plurality of stations further comprising:
a sauce dispensing station (5A), located downstream from at least one preparation station (5) in the conveying direction (C), comprising a sauce dispensing nozzle, wherein the sauce dispensing station (5A) is configured to bring the nozzle in a dispensing state, wherein the nozzle is positioned to dispense sauce in a cooking pot (3) of the plurality of cooking pots (3) conveyed to the sauce dispensing station (5A), and a resting state, wherein the sauce dispensing nozzle is shielded and/or distanced from said cooking pot (3).

7. Automated meal preparation apparatus (1) of any of the preceding claims, the plurality of stations further comprising:
a spice dispensing station (5B), located downstream from at least one preparation station (5) in the conveying direction (C), configured to dispense dried spices and/or herbs, the spice dispensing unit (5B) comprising a tube configured to receive the dried spices and/or herbs, and an air compressor connected to the tube, wherein the air compressor is configured to release compressed air into the tube so as to eject the dried spices and/or herbs from an open end of the tube into a cooking pot (3) of the plurality of cooking pots (3) conveyed to the spice dispensing station (5B), wherein the open end of the tube is sufficiently distanced from the cooking pot (3) such that vapor from the cooking pot (3) entering the tube is minimized.

8. Automated meal preparation apparatus (1) of any of the preceding claims, the plurality of stations further comprising:
an oil dispensing station (5C), located upstream from the preparation station (5) in the conveying direction (C), configured to dispense cooking oil in a cooking pot (3) of the plurality of cooking pots (3) conveyed to the oil dispensing station (5C), preferably by spraying.

9. Automated meal preparation apparatus (1) of any of the preceding claims, the plurality of stations further comprising:
a cooling station, located downstream from the cleaning station (7) in the conveying direction (C), and comprising cooling means configured to cool a cooking pot (3) of the plurality of cooking pots (3) conveyed to the cooling station.

10. Automated meal preparation apparatus (1) of any of the preceding claims, the plurality of stations further comprising:
a drying station (7B), located downstream from the cleaning station (7) in the conveying direction (C), and comprising drying means configured to dry a cooking pot (3) of the plurality of cooking pots (3) conveyed to the drying station (7B).

11. Automated meal preparation apparatus (1) of any of the preceding claims, the serving station (6) further comprising:
an automated meal container dispenser (6A) configured to provide a meal container (60) before dispensing the heated ingredients by means of the dispensing mechanism, such that the heated ingredients are dispensed from the cooking pot (3) in the provided meal container (60).

12. Automated meal preparation apparatus (1) of claim 11, further comprising:
an additional food dispenser (41), configured to dispense additional food articles in the provided meal container (60) before or after dispensing the heated ingredients by means of the dispensing mechanism.

13. Automated meal preparation apparatus (1) of any of the preceding claims, the ingredient dispensing station (4) further comprising:
a scale (112) configured to measure the weight of a cooking pot (3) of the plurality of cooking pots (3) conveyed to the ingredient dispensing station (4), wherein the scale (112) is communicatively coupled to the controller,
wherein the scale (112) and/or the cooking pot (3) comprises a moving mechanism (110) configured to move the scale (112) and the cooking pot (3) towards each other until the cooking pot (3) rests on the scale (112), so as to measure the weight of the cooking pot (3) by means of the scale (112), and
wherein the controller is configured to determine, based on the weight of the cooking pot (3) measured by the scale, a measured amount of an ingredient dispensed from the ingredient dispenser (40).

14. Automated meal preparation apparatus (1) of any of the preceding claims, wherein:
the controller is communicatively coupled to the driving means, and
the controller is further configured to control the driving means such that each cooking pot (3) of the plurality of cooking pots (3) is respectively conveyed to a subsequent station of the plurality of stations after a predetermined time interval has elapsed, such that each cooking pot (3) is conveyed to all of the plurality of stations within a meal preparation time, being a multiple of the predetermined time interval.

## Patentansprüche

1. Automatisierte Mahlzeitenzubereitungsvorrichtung (1) zur Zubereitung von Mahlzeiten, mit:
einer in sich geschlossenen Förderschiene (2), die so konfiguriert ist, dass sie mehrere Kochtöpfe (3) trägt;
einem Kippmechanismus (30), der dazu konfiguriert ist, jedem der mehreren Kochtöpfe (3) um eine Kippachse zu kippen, die im Wesentlichen parallel zum Boden derselben verläuft, wobei ein Kippwinkel jedes Kochtopfes (3) um die Kippachse von 0° einer aufrechten Position des Kochtopfes (3) entspricht;
einer Antriebseinrichtung, die dazu konfiguriert ist, die Kochtöpfe (3) in einer Förderrichtung (C) entlang der geschlossenen Förderschiene (2) gleichzeitig zu mehreren separaten Stationen zu befördern, die sich nacheinander entlang der in sich geschlossenen Förderschiene (2) befinden und in Bezug auf diese feststehend sind, wobei die mehreren Stationen folgendes aufweisen:
eine Zutatenausgabestation (4) mit einer Zutatenausgabeeinrichtung (40) zum Ausgeben von Zutaten in einen Kochtopf (3) der mehreren Kochtöpfe (3), die zu der Ausgabestation (4) befördert werden, um mindestens einen Teil einer Mahlzeit mit den Zutaten in diesem Kochtopf (3) zu herzustellen,
eine Zubereitungsstation (5), die sich stromabwärts von der Zutatenausgabestation (4) in der Förderrichtung (C) befindet und ein Erhitzungselement (50) zum Erhitzen der Zutaten in einem Kochtopf (3) der mehreren Kochtöpfe (3) aufweist, die zu der Zubereitungsstation (5) befördert werden,
eine Servierstation (6), die sich stromabwärts von der Zubereitungsstation (5) in der Förderrichtung (C) befindet und einen Ausgabemechanismus zum Ausgeben der erhitzten Zutaten aus einem Kochtopf (3) der mehreren Kochtöpfe (3) aufweist, die zu der Servierstation (6) befördert werden, sowie
eine Reinigungsstation (7), die sich stromabwärts von der Servierstation (6) und stromaufwärts von der Zutatenausgabestation (4) in der Förderrichtung (C) befindet und eine Reinigungseinheit (70) zum Reinigen eines Kochtopfes (3) der mehreren Kochtöpfe (3) aufweist, die zu der Reinigungsstation (7) befördert werden, indem Wasser und/oder eine Reinigungslösung in den Kochtopf (3) gesprüht wird;
**gekennzeichnet durch**:
den Kippmechanismus (30) mit einer Führungsschiene, die entlang der in sich geschlossenen Förderschiene (2) verläuft und dazu konfiguriert ist, direkt oder indirekt mit jedem der mehreren Kochtöpfe (3) in Eingriff zu kommen, wobei der Kippmechanismus (30) zumindest teilweise den Kippwinkel jedes Kochtopfes (3) entlang der in sich geschlossenen Förderschiene (2) steuert, indem er einen Abstand zwischen der Führungsschiene und der in sich geschlossenen Förderschiene (2) verändert.

2. Automatisierte Mahlzeitenzubereitungsvorrichtung (1) nach Anspruch 1, weiterhin mit:
einer Datenbank zum Speichern von Kochrezepten, wobei jedes Kochrezept Zutaten angibt, und einer Erhitzungsanweisung mit einer Erhitzungszeit, einer Erhitzungstemperatur und/oder einer Erhitzungsstärke; sowie
einer datentechnisch mit der Datenbank gekoppelten Steuerung und der Zutatenausgabeeinrichtung (40) und/oder dem Heizelement (50), wobei die Steuerung dazu konfiguriert ist, die Zutatenausgabeeinrichtung (40) auf der Grundlage zumindest der in dem jeweiligen Kochrezept angegebenen Zutaten derart zu steuern, dass die Zutatenausgabeeinrichtung die Zutaten die Zutaten ausgibt und der zu der Zutatenausgabestation beförderte Kochtopf (3) die Zutaten erhält, um die Mahlzeit in dem Kochtopf (3) herzustellen, und/oder dazu konfiguriert ist, das Heizelement (50) auf der Grundlage zumindest der Erhitzungsanweisung derart zu steuern, dass die Zutaten in dem zu der Zubereitungsstation (5) beförderten Kochtopf (3) gemäß der Erhitzungsanweisung erhitzt werden.

3. Automatisierte Mahlzeitenzubereitungsvorrichtung (1) nach Anspruch 1 oder 2,
wobei der Kippmechanismus (30) dazu konfiguriert ist, einen Kochtopf (3) der mehreren, zu der Zutatenausgabestation (4) beförderten Kochtöpfe (3) in einem Kippwinkel zwischen 0° und 90° zu kippen; und
wobei der Kippmechanismus (30) dazu konfiguriert ist, einen Kochtopf (3) der mehreren, zu der Zubereitungsstation (5) beförderten Kochtöpfe (3) in einem Kippwinkel zwischen 0° und 90° zu kippen; und
wobei der Kippmechanismus (30) zumindest teilweise den Ausgabemechanismus bildet und dazu konfiguriert ist, einen Kochtopf (3) der mehreren, zu der Servierstation (6) beförderten Kochtöpfe (3) in einem Kippwinkel zwischen 90° und 180° zu kippen, um die Mahlzeit auszugeben; und
wobei der Kippmechanismus (30) dazu konfiguriert ist, einen Kochtopf (3) der mehreren, zu der Reinigungsstation (7) beförderten Kochtöpfe (3) in einem Kippwinkel zwischen 90° und 270°, und insbesondere von ca. 180°, zu kippen, und die Reinigungseinheit (70) in einer geringeren Höhe als der Kochtopf (3) angeordnet ist.

4. Automatisierte Mahlzeitenzubereitungsvorrichtung (1) nach einem der vorhergehenden Ansprüche, wobei jeder der mehreren Kochtöpfe (3) folgendes aufweist:
eine Mischflosse (31) zum Mischen der Zutaten in dem Kochtopf (3);
ein Antihaft- und/oder Wärmeleitmaterial, vorzugsweise in Form einer Beschichtung; sowie
einen Drehmechanismus (35), der eine Drehung des Kochtopfes (3) um dessen Drehachse ermöglicht, wobei der Drehmechanismus (35) mechanisch angetrieben werden kann, um den Kochtopf (3) um die Drehachse zu drehen.

5. Automatisierte Mahlzeitenzubereitungsvorrichtung (1) nach einem der vorhergehenden Ansprüche, wobei die in sich geschlossene Förderschiene (2) zumindest teilweise durch eine Kühlkammer (CC) hindurch verläuft, und wobei sich die Zutatenausgabestation (4) in der Kühlkammer (CC) befindet.

6. Automatisierte Mahlzeitenzubereitungsvorrichtung (1) nach einem der vorhergehenden Ansprüche, wobei die mehreren Stationen weiterhin folgendes aufweisen:
eine Soßenausgabestation (5A), die sich stromabwärts von zumindest einer Zubereitungsstation (5) in der Förderrichtung (C) befindet, mit einem Soßenausgießer, wobei die Soßenausgabestation (5A) dazu konfiguriert ist, den Ausgießer in einen Ausgabezustand, in dem der Ausgießer so positioniert ist, dass er Soße in einen Kochtopf (3) der mehreren, zu der Soßenausgabestation (5A) beförderten Kochtöpfe (3) ausgibt, sowie einen Ruhezustand zu bringen, in dem der Soßenausgießer von dem Kochtopf (3) abgeschirmt und/oder beabstandet ist.

7. Automatisierte Mahlzeitenzubereitungsvorrichtung (1) nach einem der vorhergehenden Ansprüche, wobei die mehreren Stationen folgendes aufweisen:
eine Gewürzausgabestation (5B), die sich stromabwärts von mindestens einer Zubereitungsstation (5) in der Förderrichtung (C) befindet und die dazu konfiguriert ist, die getrockneten Gewürze und/oder Kräuter aufzunehmen, sowie einen mit dem Rohr verbundenen Luftkompressor, wobei der Luftkompressor dazu konfiguriert ist, Druckluft in das Rohr abzugeben, um die getrockneten Gewürze und/oder Kräuter von einem offenen Ende des Rohres in einen Kochtopf (3) der mehreren, zu der Gewürzausgabestation (5B) beförderten Kochtöpfe (3) auszustoßen, wobei das offene Ende des Rohres ausreichend von dem Kochtopf (3) beabstandet ist, so dass aus dem Kochtopf (3) in das Rohr eintretender Dampf auf ein Minimum reduziert wird.

8. Automatisierte Mahlzeitenzubereitungsvorrichtung (1) nach einem der vorhergehenden Ansprüche, wobei die mehreren Stationen weiterhin folgendes aufweisen:
eine Ölausgabestation (5C), die sich stromaufwärts von der Zubereitungsstation (5) in der Förderrichtung (C) befindet und dazu konfiguriert ist, Speiseöl in einen Kochtopf (3) der mehreren, zu der Ölausgabestation (SC) beförderten Kochtöpfe (3) vorzugsweise durch Sprühen auszugeben.

9. Automatisierte Mahlzeitenzubereitungsvorrichtung (1) nach einem der vorhergehenden Ansprüche, wobei die mehreren Stationen weiterhin folgendes aufweisen:
eine Kühlstation, die sich stromabwärts von der Reinigungsstation (7) in der Förderrichtung (C) befindet und eine Kühleinrichtung zum Kühlen eines Kochtopfes (3) der mehreren, zu der Kühlstation beförderten Kochtöpfe aufweist.

10. Automatisierte Mahlzeitenzubereitungsvorrichtung (1) nach einem der vorhergehenden Ansprüche, wobei die mehreren Stationen weiterhin folgendes aufweisen:
eine Trocknungsstation (7B), die sich stromabwärts von der Reinigungsstation (7) in der Förderrichtung (C) befindet und eine Trocknungseinrichtung zum Trocknen eines Kochtopfes (3) der mehreren, zu der Trocknungsstation (7B) beförderten Kochtöpfe (3) aufweist.

11. Automatisierte Mahlzeitenzubereitungsvorrichtung (1) nach einem der vorhergehenden Ansprüche, wobei die Servierstation (6) weiterhin folgendes aufweist:
einen automatisierten Essensbehälterspender (6A) zum Bereitstellen eines Essensbehälters (60), bevor die erhitzten Zutaten mithilfe des Ausgabemechanismus ausgegeben werden, so dass die erhitzten Zutaten aus dem Kochtopf (3) in den bereitgestellten Essensbehälter (60) ausgegeben werden.

12. Automatisierte Mahlzeitenzubereitungsvorrichtung (1) nach Anspruch 11, weiterhin mit:
einer zusätzlichen Lebensmittelausgabeeinrichtung (41) zum Ausgeben zusätzlicher Lebensmittel in den bereitgestellten Essensbehälter (60), bevor oder nachdem die erhitzten Zutaten mithilfe des Ausgabemechanismus ausgegeben werden.

13. Automatisierte Mahlzeitenzubereitungsvorrichtung (1) nach einem der vorhergehenden Ansprüche, wobei die Zutatenausgabestation (4) weiterhin folgendes aufweist:
eine Waage (112) zum Erfassen des Gewichts eines Kochtopfes (3) der mehreren, zu der Zutatenausgabestation (4) beförderten Kochtöpfe (3), wobei die Waage (112) datentechnisch mit der Steuerung gekoppelt ist,
wobei die Waage (112) und/oder der Kochtopf (3) einen Bewegungsmechanismus (110) aufweist, der dazu konfiguriert ist, die Waage (112) und den Kochtopf (3) zueinander zu bewegen, bis der Kochtopf (3) auf der Waage (112) aufliegt, um das Gewicht des Kochtopfes (3) mithilfe der Waage (112) zu erfassen, und
wobei die Steuerung dazu konfiguriert ist, auf der Grundlage des von der Waage erfassten Gewichts des Kochtopfes (3) eine erfasste Menge einer von der Zutatenausgabeeinrichtung (40) ausgegebenen Zutat zu bestimmen.

14. Automatisierte Essenzubereitungsvorrichtung (1) nach einem der vorhergehenden Ansprüche, wobei:
die Steuerung datentechnisch mit der Antriebseinrichtung gekoppelt ist, und
die Steuerung ferner dazu konfiguriert ist, die Antriebseinrichtung so zu steuern, dass jeder Kochtopf (3) der mehreren Kochtöpfe (3) nach Ablauf einer vorgegebenen Zeitspanne jeweils zu einer nachfolgenden Station der mehreren Stationen befördert wird, so dass jeder Kochtopf (3) zu allen der mehreren Stationen innerhalb einer Essenszubereitungszeit befördert wird, welche ein Vielfaches der vorgegebenen Zeitspanne ist.

## Revendications

1. Appareil de préparation de repas automatisé (1) pour la préparation de repas, comprenant :
un rail de transport en boucle fermée (2) configuré pour supporter une pluralité de marmites (3) ;
un mécanisme d'inclinaison (30) configuré pour incliner chacune de la pluralité de marmites (3) autour d'un axe d'inclinaison sensiblement parallèle au fond de celle-ci, dans lequel un angle d'inclinaison de chaque marmite (3) autour de l'axe d'inclinaison de 0° correspond à une position droite de la marmite (3) ;
des moyens d'entraînement configurés pour transporter simultanément les marmites (3) dans une direction de transport (C) le long du rail de transport en boucle fermée (2) vers une pluralité de postes séparés situés de manière séquentielle le long du rail de transport en boucle fermée (2) et fixes par rapport à celui-ci, la pluralité de postes comprenant :
un poste de distribution (4) d'ingrédients comprenant un distributeur d'ingrédients (40) configuré pour distribuer des ingrédients dans une marmite (3) de la pluralité de marmites (3) transportée vers le poste de distribution (4), afin de former au moins une partie d'un repas, comprenant les ingrédients, dans ladite marmite (3),
un poste de préparation (5), situé en aval du poste de distribution (4) d'ingrédients dans la direction de transport (C), et comprenant un élément chauffant (50) configuré pour chauffer les ingrédients dans une marmite (3) de la pluralité de marmites (3) transportée vers le poste de préparation (5),
un poste de service (6), situé en aval du poste de préparation (5) dans la direction de transport (C), et comprenant un mécanisme de distribution configuré pour distribuer les ingrédients chauffés à partir d'une marmite (3) de la pluralité de marmites (3) transportée vers le poste de service (6), et
un poste de nettoyage (7), situé en aval du poste de service (6) et en amont du poste de distribution (4) d'ingrédients dans la direction de transport (C), et comprenant une unité de nettoyage (70) configurée pour nettoyer une marmite (3) de la pluralité de marmites (3) transportée vers le poste de nettoyage (7), en pulvérisant de l'eau et/ou une solution de nettoyage dans la marmite (3) ; **caractérisé par** : le mécanisme d'inclinaison (30) comprenant un rail de guidage se déployant le long du rail de transport en boucle fermée (2) et configuré pour venir en prise, directement ou indirectement, avec chacune de la pluralité de marmites (3), dans lequel le mécanisme d'inclinaison (30) commande au moins partiellement l'angle d'inclinaison de chaque marmite (3) le long du rail de transport en boucle fermée (2) en faisant varier une distance entre le rail de guidage et le rail de transport en boucle fermée (2).

2. Appareil de préparation de repas automatisé (1) selon la revendication 1, comprenant en outre :
une base de données configurée pour stocker des recettes de repas, dans lequel chaque recette de repas indique des ingrédients, et une instruction de chauffage comprenant un temps de chauffage, une température de chauffage, et/ou une puissance de chauffage ; et
un dispositif de commande couplé de manière communicante à la base de données, et au distributeur d'ingrédients (40) et/ou à l'élément chauffant (50), dans lequel le dispositif de commande est configuré pour commander le distributeur d'ingrédients (40) sur la base au moins des ingrédients indiqués par chaque recette de repas, de telle sorte que le distributeur d'ingrédients distribue les ingrédients et que la marmite (3) transportée vers le poste de distribution d'ingrédients reçoive les ingrédients afin de former le repas dans ladite marmite (3), et/ou configuré pour commander l'élément chauffant (50) sur la base au moins de l'instruction de chauffage, de telle sorte que les ingrédients dans la marmite (3) transportée vers le poste de préparation (5) soient chauffés selon l'instruction de chauffage.

3. Appareil de préparation de repas automatisé (1) selon la revendication 1 ou 2,
dans lequel le mécanisme d'inclinaison (30) est configuré pour incliner une marmite (3) de la pluralité de marmites (3) transportée vers le poste de distribution (4) d'ingrédients suivant un angle d'inclinaison entre 0° et 90 ; et
dans lequel le mécanisme d'inclinaison (30) est configuré pour incliner une marmite (3) de la pluralité de marmites (3) transportée vers le poste de préparation (5) suivant un angle d'inclinaison entre 0° et 90°; et
dans lequel le mécanisme d'inclinaison (30) constitue au moins partiellement le mécanisme de distribution, et est configuré pour incliner une marmite (3) de la pluralité de marmites (3) transportée vers le poste de service (6) suivant un angle d'inclinaison entre 90° et 180° afin de distribuer le repas ; et
dans lequel le mécanisme d'inclinaison (30) est configuré pour incliner une marmite (3) de la pluralité de marmites (3) transportée vers le poste de nettoyage (7) suivant un angle d'inclinaison entre 90° et 270°, et plus particulièrement d'environ 180°, et l'unité de nettoyage (70) est positionnée à une hauteur plus basse que la marmite (3).

4. Appareil de préparation de repas automatisé (1) selon l'une quelconque des revendications précédentes, dans lequel chacune de la pluralité de marmites (3) comprend :
une ailette de mélange (31) configurée pour mélanger les ingrédients dans la marmite (3) ;
un matériau antiadhésif et/ou thermoconducteur, de préférence sous la forme d'un revêtement ; et
un mécanisme de rotation (35) configuré pour permettre une rotation de la marmite (3) autour d'un axe de rotation de celui-ci, dans lequel le mécanisme de rotation (35) peut être entraîné mécaniquement afin de faire tourner la marmite (3) autour de l'axe de rotation.

5. Appareil de préparation de repas automatisé (1) selon l'une quelconque des revendications précédentes, dans lequel le rail de transport en boucle fermée (2) s'étend au moins partiellement à travers une chambre de refroidissement (CC), et dans lequel le poste de distribution (4) d'ingrédients est situé dans la chambre de refroidissement (CC).

6. Appareil de préparation de repas automatisé (1) selon l'une quelconque des revendications précédentes, la pluralité de postes comprenant en outre :
un poste de distribution de sauce (5A), situé en aval d'au moins un poste de préparation (5) dans la direction de transport (C), comprenant une buse de distribution de sauce, dans lequel le poste de distribution de sauce (5A) est configuré pour mettre la buse dans un état de distribution, dans lequel la buse est positionnée pour distribuer de la sauce dans une marmite (3) de la pluralité de marmites (3) transportée vers le poste de distribution de sauce (5A), et un état de repos, dans lequel la buse de distribution de sauce est cachée et/ou éloignée de ladite marmite (3).

7. Appareil de préparation de repas automatisé (1) selon l'une quelconque des revendications précédentes, la pluralité de postes comprenant en outre :
un poste de distribution d'épices (5B), situé en aval d'au moins un poste de préparation (5) dans la direction de transport (C), configuré pour distribuer des épices et/ou herbes séchées, le poste de distribution d'épices(5B) comprenant un tube configuré pour recevoir les épices et/ou herbes séchées, et un compresseur d'air relié au tube, dans lequel le compresseur d'air est configuré pour libérer de l'air comprimé dans le tube de façon à éjecter les épices et/ou herbes séchées à partir d'une extrémité ouverte du tube dans une marmite (3) de la pluralité de marmites (3) transportée vers le poste de distribution d'épices (5B), dans lequel l'extrémité ouverte du tube est suffisamment éloignée de la marmite (3) de telle sorte que de la vapeur en provenance de la marmite (3) entrant dans le tube soit réduite au minimum.

8. Appareil de préparation de repas automatisé (1) selon l'une quelconque des revendications précédentes, la pluralité de postes comprenant en outre :
un poste de distribution d'huile (5C), situé en amont du poste de préparation (5) dans la direction de transport (C), configuré pour distribuer de l'huile de cuisson dans une marmite (3) de la pluralité de marmites (3) transportée vers le poste de distribution d'huile (5C), de préférence par pulvérisation.

9. Appareil de préparation de repas automatisé (1) selon l'une quelconque des revendications précédentes, la pluralité de postes comprenant en outre :
un poste de refroidissement, situé en aval du poste de nettoyage (7) dans la direction de transport (C), et comprenant des moyens de refroidissement configurés pour refroidir une marmite (3) de la pluralité de marmites (3) transportée vers le poste de refroidissement.

10. Appareil de préparation de repas automatisé (1) selon l'une quelconque des revendications précédentes, la pluralité de postes comprenant en outre :
un poste de séchage (7B), situé en aval du poste de nettoyage (7) dans la direction de transport (C), et comprenant des moyens de séchage configurés pour sécher une marmite (3) de la pluralité de marmites (3) transportée vers le poste de séchage (7B).

11. Appareil de préparation de repas automatisé (1) selon l'une quelconque des revendications précédentes, le poste de service (6) comprenant en outre :
un distributeur de contenant de repas automatisé (6A) configuré pour fournir un contenant de repas (60) avant de distribuer les ingrédients chauffés au moyen du mécanisme de distribution, de telle sorte que les ingrédients chauffés soient distribués à partir de la marmite (3) dans le contenant de repas (60) fourni.

12. Appareil de préparation de repas automatisé (1) selon la revendication 11, comprenant en outre :
un distributeur d'aliments supplémentaires (41), configuré pour distribuer des articles alimentaires supplémentaires dans le contenant de repas (60) fourni avant ou après la distribution des ingrédients chauffés au moyen du mécanisme de distribution.

13. Appareil de préparation de repas automatisé (1) selon l'une quelconque des revendications précédentes, le poste de distribution (4) d'ingrédients comprenant en outre :
une balance (112) configurée pour mesurer le poids d'une marmite (3) de la pluralité de marmites (3) transportée vers le poste de distribution (4) d'ingrédients, dans lequel la balance (112) est couplée de manière communicante au dispositif de commande,
dans lequel la balance (112) et/ou la marmite (3) comprennent un mécanisme de déplacement (110) configuré pour déplacer la balance (112) et la marmite (3) l'une vers l'autre jusqu'à ce que la marmite (3) repose sur la balance (112), de façon à mesurer le poids de la marmite (3) au moyen de la balance (112), et
dans lequel le dispositif de commande est configuré pour déterminer, sur la base du poids de la marmite (3) mesuré par la balance, une quantité mesurée d'un ingrédient distribué à partir du distributeur d'ingrédients (40).

14. Appareil de préparation de repas automatisé (1) selon l'une quelconque des revendications précédentes, dans lequel :
le dispositif de commande est couplé de manière communicante aux moyens d'entraînement, et
le dispositif de commande est en outre configuré pour commander les moyens d'entraînement de telle sorte que chaque marmite (3) de la pluralité de marmites (3) soit transportée respectivement vers un poste suivant de la pluralité de postes après qu'un intervalle de temps prédéterminé s'est écoulé, de telle sorte que chaque marmite (3) soit transportée vers tous les postes de la pluralité de postes dans un temps de préparation de repas, qui est un multiple de l'intervalle de temps prédéterminé.
